# FASCICULE DE BREVET EUROPEEN

(11) **EP 1 807 752 B1**
(45) Date de publication et mention de la délivrance du brevet: **19.10.2016**
(21) Numéro de dépôt: 05857764.4
(22) Date de dépôt: 21.10.2005
(51) Int. Cl.: G06F 3/0338, G06F 3/0346, G06F 3/0481

(54) **DISPOSITIF AUTONOME, SYSTEME ET PROCEDE DE NAVIGATION DANS UN ESPACE A AU MOINS TROIS DIMENSIONS**
AUTONOMES DREIDIMENSIONALES NAVIGATIONSGERÄT, -VORRICHTUNG UND -VERFAHREN
STAND-ALONE DEVICE, SYSTEM AND METHOD FOR NAVIGATING IN A SPACE HAVING AT LEAST THREE DIMENSIONS

(30) Priorité: 22.10.2004 FR 0411297
(43) Date de publication de la demande: 18.07.2007
(73) Titulaire: Commissariat à l'Énergie Atomique et aux Énergies Alternatives, 75015 Paris (FR)
(72) Inventeur: JOUANET, Laurent, F-38880 Autrans (FR); DAVID, Dominique, F-38640 Claix (FR); CARITU, Yanis, 38134 Saint Joseph De Riviere (FR); SCHERMESSER, Patrick, F-38240 Meylan (FR)
(74) Mandataire: Santarelli
(86) Numéro de dépôt international: PCT/FR2005/002623
(87) Numéro de publication internationale: WO 2006/045934

(56) Documents cités:
- EP-A- 1 276 073
- WO-A-00/14676
- WO-A1-88/05942
- AT-U1- 6 009
- AT-U1- 6 009
- FR-A- 2 838 185
- JP-A- H08 161 103
- US-A- 5 624 117
- US-A- 5 825 350
- US-A- 5 923 318
- US-A- 6 069 594
- US-A1- 2001 055 001
- US-A1- 2002 140 698
- US-A1- 2004 130 529
- US-B1- 6 720 949

## Description

La présente invention concerne un dispositif autonome de navigation dans un espace à au moins trois dimensions.

Elle concerne également un système de navigation ainsi qu'un procédé de navigation dans un espace à au moins trois dimensions.

Le terme navigation recouvre à la fois l'exploration et la recherche dans un espace virtuel et l'inspection et la manipulation d'objet dans un espace à plusieurs dimensions. Dans ce cas l'espace peut être soit un espace virtuel, soit un espace réel, la navigation dans un espace virtuel concernant plus particulièrement la manipulation d'une caméra ou encore d'un avion du type drone.

Dans un espace virtuel, la navigation consiste à déplacer de manière relative un objet ou un point de vue par rapport à l'espace virtuel. En particulier, il peut s'agir de la manipulation d'un objet mobile dans l'espace virtuel ou encore du déplacement d'un point d'observation dans un espace virtuel. Ce type de navigation est notamment utilisé dans les jeux vidéo dans un espace virtuel à trois dimensions ou encore pour l'exploration d'une base de données à trois dimensions, telle qu'une base de données géographiques.

La navigation dans des espaces à trois dimensions est réalisée généralement à l'aide de dispositifs périphériques posés sur un plan de travail.

Pour permettre la navigation selon six degrés de liberté dans un espace à trois dimensions, on connaît des systèmes requérant l'utilisation simultanée des deux mains pour manipuler indépendamment deux dispositifs de navigation.

Ainsi, à titre d'exemples, il est courant d'associer pour la navigation dans un espace virtuel, un clavier avec un périphérique mobile dans un plan comme une souris standard ou un périphérique mobile dans l'espace du type d'un joystick.

On peut également envisager l'association d'une souris standard à un deuxième dispositif de navigation du type joystick.

Ces différentes méthodes de navigation requérant l'utilisation simultanée des deux mains de l'utilisateur rendent la navigation peu intuitive. L'apprentissage du maniement de ces dispositifs de navigation est difficile et longue et peut constituer un frein important pour de nombreux utilisateurs. En outre, ces dispositifs de navigation requièrent généralement l'utilisation d'un plan de travail pour leurs fonctionnements.

Ce type de technique de navigation est notamment décrit dans le document US 2002/14 0698.

On connaît également des dispositifs de navigation sensibles à six degrés de liberté correspondant à trois rotations et trois translations dans l'espace. Un tel dispositif est décrit par exemple dans le document US 5 923 318.

Dans un tel dispositif, la navigation est obtenue grâce au déplacement du dispositif dans l'espace. Il s'agit d'un dispositif isotonique. Les déplacements du dispositif sont ensuite traduits en actions diverses de déplacement dans l'espace virtuel ou réel de navigation.

Cependant, du fait du couplage des différents degrés de liberté dans un même dispositif isotonique, ce type de dispositif de navigation est inadapté pour la navigation dans un espace à trois dimensions.

Le document JPH08161103A présente un dispositif d'entrée d'informations tridimensionnelles. Ce dispositif comporte deux capteurs d'inclinaison pour détecter l'inclinaison de la manette autour de deux axes, ainsi que des boutons ou un levier sur une face permettant d'indiquer un mouvement dans un plan, et, selon certaines modes de réalisation, deux boutons ou un levier sur une autre face pour commander un mouvement dans une direction perpendiculaire à ce plan. Par ailleurs, il est prévu de pouvoir adapter une base supplémentaire comportant un capteur d'inclinaison selon un troisième axe.

La présente invention a pour but de résoudre les inconvénients précités et de proposer un dispositif de navigation dont la maîtrise par l'utilisateur est immédiate pour la navigation dans un espace à au moins trois dimensions.

A cet effet, la présente invention vise tout d'abord un dispositif autonome de navigation dans un espace à au moins trois dimensions conforme à la revendication 1.

Ainsi, ce dispositif autonome de navigation est constitué de deux systèmes découplés regroupés dans un même boîtier. Un premier système est sensible à des mouvements isotoniques de rotation dans l'espace du boîtier incorporant le système, et un second système est constitué d'au moins un dispositif isométrique permettant de générer une action dans l'espace de navigation.

Grâce au découplage de ces actions dans un même boîtier manipulé par un utilisateur, celui-ci peut maîtriser de manière intuitive la navigation dans un espace à trois dimensions.

Le dispositif isométrique est sensible à une force exercée selon au moins un axe du dispositif isométrique et le signal de commande d'un déplacement est un signal représentatif de la force exercée selon cet axe.

Un tel dispositif isométrique permet d'obtenir une action graduelle selon un degré de liberté dans l'espace à au moins trois dimensions, proportionnelle à la force exércée sélon un axe du dispositif isométrique.

Un tel dispositif isométrique permet ainsi de prendre en compte la force exercée par l'utilisateur sur ce dispositif afin d'améliorer les performances et le réalisme de la navigation dans l'espace à au moins trois dimensions.

Selon une caractéristique de l'invention, le dispositif isométrique est sensible à une force exercée selon trois axes et adapté à générer des signaux de commande d'un déplacement bidirectionnel selon trois axes dudit espace de navigation.

Grâce à ce dispositif isométrique, le dispositif autonome de navigation permet de naviguer selon six degrés de liberté dans un espace à au moins trois dimensions, par l'association décorrélée d'un dispositif isométrique et d'un dispositif isotonique dans un même boîtier.

Le boîtier a une forme sensiblement parallélépipédique. Le dispositif isométrique est disposé sur une face supérieure du boîtier et adapté à être actionné par le pouce d'un utilisateur tenant ledit boîtier dans une main, ou sur une face latérale dudit boîtier et adapté à être actionné par un doigt de l'utilisateur tenant le boîtier dans une main.

Un tel dispositif autonome de navigation permet d'offrir à l'utilisateur une gestuelle intuitive et une ergonomie dans le mouvement de la main. Par la manipulation à l'aide d'une seule main d'un dispositif autonome de navigation, il est possible de naviguer dans un espace à au moins trois dimensions ou corrélativement de manipuler un objet dans un espace à au moins trois dimensions de manière intuitive.

La présente invention concerne également, selon un second aspect, un système de navigation dans un espace à au moins trois dimensions comprenant un dispositif autonome de navigation selon l'invention et des moyens de traitement adaptés à prendre en compte les signaux représentatifs de l'inclinaison du boîtier et le signal de commande pour générer au moins un déplacement dans l'espace à au moins trois dimensions.

Ce système de navigation présente des caractéristiques et avantages analogues au dispositif de navigation qu'il met en oeuvre.

En outre, il présente les caractéristiques suivantes :
- les signaux représentatifs de l'inclinaison du boîtier sont adaptés à générer trois déplacements bidirectionnels dans l'espace de navigation ;
- les signaux représentatifs de l'inclinaison du boîtier sont adaptés à générer des signaux de commande de rotation bidirectionnelle dans l'espace de navigation ;
- le signal de commande est adapté à générer des déplacements bidirectionnels selon trois axes dudit espace de navigation ;
- le signal de commande est un signal représentatif d'une force exercée selon au moins un axe du dispositif isométrique du dispositif autonome de navigation et le signal de commande est adapté à générer un déplacement dans l'espace dépendant de la force exercée selon cet axe ;
- le déplacement dans l'espace est dépendant d'une comparaison du signal représentatif de la force exercée selon cet axe avec une valeur de seuil prédéterminée ;
- le signal représentatif de la force exercée selon cet axe est adapté à générer une translation bidirectionnelle dans l'espace de navigation.

Enfin, la présente invention concerne, selon un troisième aspect, un procédé de navigation dans un espace à au moins trois dimensions conforme à la revendication 10

En particulier, ce procédé de navigation comprend :
- des étapes de génération de signaux de commande de rotation bidirectionnelle dans l'espace à partir des signaux représentatifs de l'inclinaison du boîtier et une étape de génération de signaux de commande de translation bidirectionnelle dans l'espace à partir des signaux de commande générés par le dispositif isométrique.
- des étapes de génération de signaux de commande de rotation bidirectionnelle et de translation bidirectionnelle dans l'espace à partir des signaux représentatifs de l'inclinaison du boîtier et une étape de génération de signaux de commande de translation dans l'espace à partir des signaux de commande générés par le dispositif isométrique.
- des étapes de génération de signaux de commande de deux rotations bidirectionnelles et d'une translation bidirectionnelle dans l'espace à partir des signaux représentatifs de l'inclinaison du boîtier et une étape de génération de signaux de commande de translation dans l'espace à partir des signaux de commande générés par le dispositif isométrique.

- des étapes de génération de signaux de commande d'une rotation bidirectionnelle et de deux translations bidirectionnelles dans l'espace à partir des signaux représentatifs de l'inclinaison du boîtier et une étape de génération de signaux de commande de translation bidirectionnelle dans l'espace à partir des signaux de commande générés par le dispositif isométrique.
- des étapes de génération de signaux de commande de trois rotations bidirectionnelles dans l'espace à partir des signaux représentatifs de l'inclinaison du boîtier et une étape de génération de signaux de commande de translation dans l'espace à partir des signaux de commande générés par le dispositif isométrique.
- des étapes de génération de signaux de commande de trois rotations bidirectionnelles dans l'espace à partir des signaux représentatifs de l'inclinaison du boîtier et une étape de génération de signaux de commande de trois translations bidirectionnelles dans l'espace à partir des signaux de commande générés par le dispositif isométrique.

D'autres particularités et avantages de l'invention apparaîtront encore dans la description ci-après.

Aux dessins annexés, donnés à titre d'exemples non limitatifs :
- la figure 1 est un schéma bloc illustrant un dispositif autonome de navigation conforme à un mode de réalisation de l'invention ;
- la figure 2 est un schéma illustrant un capteur isotonique du dispositif de la figure 1 ;
- les figures 3A, 3B et 3C illustrent un mode de réalisation d'un boîtier du dispositif autonome de navigation conforme à un premier mode de réalisation de l'invention ;
- les figures 4A, 4B et 4C illustrent un mode de réalisation d'un boîtier du dispositif autonome de navigation conforme à un second mode de réalisation de l'invention ;
- la figure 5 est un schéma bloc illustrant un système de navigation conforme à l'invention appliqué à un espace virtuel ;
- les figures 6 à 15 illustrent différents algorithmes de traitement mis en oeuvre par les moyens de traitement du système de navigation de la figure 5, selon différents modes de réalisation de l'invention pour l'exploration d'un espace virtuel ;
- les figures 16 et 17 illustrent des algorithmes de traitement mis en oeuvre par les moyens de traitement du système de navigation de la figure 5 pour la manipulation d'objets en trois dimensions dans un espace virtuel ;
- la figure 18 est un schéma bloc illustrant un système de navigation conforme à l'invention appliqué au contrôle d'un objet télécommandé ; et
- les figures 19 et 20 illustrent des algorithmes de traitement mis en oeuvre par les moyens de traitement du système de navigation de la figure 18 pour le pilotage d'un objet télécommandé du type drone.

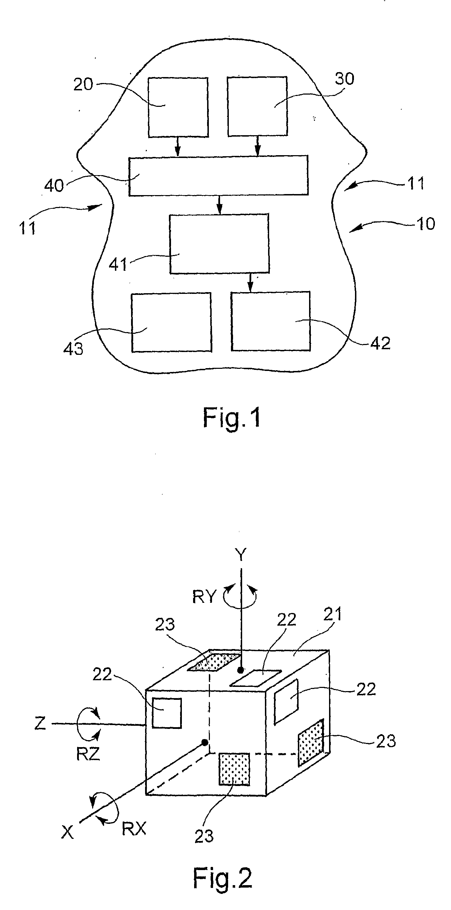

On va décrire tout d'abord en référence à la figure 1 un dispositif autonome de navigation selon un mode de réalisation de l'invention.

Ce dispositif se présente sous la forme d'un boîtier 10 susceptible d'être manipulé par un utilisateur.

La description de ce boîtier sera explicitée ultérieurement. On notera toutefois qu'il peut présenter une forme extérieure permettant une bonne prise en main par l'utilisateur.

Ce boîtier incorpore principalement des capteurs isotoniques 20 à trois degrés de liberté ainsi qu'au moins un capteur isométrique 30.

Les capteurs isotoniques 20 sont adaptés à générer des signaux représentatifs de l'inclinaison du boîtier selon les axes de tangage, de roulis et de lacets. Ces capteurs isotoniques 20 seront décrits plus en détail ci-après.

Le capteur isométrique est également adapté à générer un signal de commande d'une action dans un espace de navigation.

On rappellera que les capteurs isotoniques sont des dispositifs adaptés à générer des signaux dépendant du déplacement même du dispositif. Les dispositifs isométriques sont des dispositifs sensibles à une pression ou une force. Ils sont adaptés à capter une force appliquée sur le capteur mais ne se déplacent pas de manière perceptible.

Des exemples de capteurs isotoniques et isométriques seront donnés ci-après.

Le dispositif de navigation 10 comporte en outre en sortie de ses capteurs 20, 30, un convertisseur 40 adapté à convertir les signaux analogiques en signaux numériques pour leur traitement et leur transmission à des moyens de traitement.

Un micro contrôleur 41 et un dispositif de transmission 42 par radio fréquence sont en outre associés au convertisseur 40.

Un système de batterie 43 est également prévu pour fournir de manière embarquée l'énergie au dispositif de navigation 11.

Bien entendu, le système de transmission 42 pourrait être remplacé par tout autre type de transmission de données, éventuellement même par un système de transmission filaire.

On va décrire à présent un exemple de capteur isotonique à trois degrés de liberté en référence à la figure 2.

On pourra se reporter avantageusement au document FR 2 838 185 au nom de la demanderesse pour une description détaillée d'un tel capteur isotonique.

En particulier, ce capteur se présente sous la forme d'un support 21 de forme cubique. Ce support sert de référence de positionnement et permet de définir un système d'axe X, Y et Z orthogonaux constituant une référence à trois dimensions.

Dans cet exemple de réalisation, le capteur comporte trois accéléromètres 22 et trois magnétomètres 23.

A partir des valeurs de sortie AX, AY, et AZ fournies par les accéléromètres 22 et les valeurs de sortie MX, MY, et MZ fournies par les magnétomètres 23, il est possible de déterminer par calcul, dans un référentiel où les axes X et Y sont horizontaux et l'axe Z vertical, la valeur de l'élévation RX sur l'axe de tangage X, la valeur du twist RZ sur l'axe de roulis Y et la valeur de l'azimut RZ sur l'axe de lacet Z.

Les calculs des valeurs RX, RY et RZ sont détaillés notamment dans le document FR 2 838 135.

En pratique, il est possible de déterminer ces valeurs à partir d'un seul capteur sensible à la gravité tel qu'un accéléromètre et d'un seul capteur sensible à un champ magnétique tel qu'un magnétomètre.

Cependant, pour des raisons de robustesse des mesures, il est préférable d'utiliser au moins deux accéléromètres et au moins deux magnétomètres, et dans ce mode de réalisation trois accéléromètres 22 et trois magnétomètres 23.

On notera à cet égard que ce dispositif de navigation est un dispositif autonome au sens où il comporte les moyens nécessaires à la génération des angles de rotation RX, RY, RZ à partir d'un référentiel absolu tel qu'un référentiel géophysique (défini par la gravité ou le champ magnétique terrestre).

Ainsi, il n'est pas nécessaire d'appareiller l'environnement dans lequel est utilisé le dispositif de navigation pour calculer les angles à partir d'un référentiel extérieur (à l'aide par exemple d'un générateur de champ magnétique ou optique).

A ces capteurs isotoniques permettant de connaître la position angulaire dans l'espace du dispositif de navigation et de fournir ainsi des mesures d'inclinaisons et/ou d'angles, sont associés un ou plusieurs dispositifs isométriques 30.

Selon un premier mode de réalisation de l'invention, ce dispositif isométrique peut être constitué d'un unique bouton poussoir dont l'activation engendre un signal de commande d'une action dans l'espace de navigation, et par exemple d'un déplacement monodirectionnel, tel que par exemple une translation monodirectionnelle selon un axe de l'espace de navigation.

Si l'on souhaite obtenir une action bidirectionnelle, il peut être possible de prévoir que le type d'actionnement du bouton poussoir (un clic ou un double clic) engendre un signal de commande d'une action prédéterminée et l'inverse de cette action dans l'espace de navigation.

Plus simplement, il est possible de prévoir deux boutons poussoirs comme capteurs isométriques permettant d'obtenir ainsi une action et son inverse, et par exemple un déplacement bidirectionnel dans l'espace de navigation.

Bien entendu, les deux boutons poussoirs du dispositif de navigation peuvent éventuellement être associés à des actions tout à fait différentes et non simplement inverses l'une de l'autre, bien que ce type de dispositif ne soit pas très ergonomique du point de vue de l'utilisateur.

Selon un autre mode de réalisation de l'invention, le dispositif isométrique peut être sensible à une force exercée selon un axe de ce dispositif isométrique de telle sorte que le signal de commande généré par ce dispositif sera un signal représentatif de la force exercée selon cet axe.

On peut ainsi commander une action graduelle dans l'espace de navigation à partir d'un tel dispositif isométrique.

A titre d'exemple, ce dispositif isométrique peut être constitué d'un potentiomètre.

Ainsi, un potentiomètre étant sensible à un effort bidirectionnel sur une de ces directions, le dispositif isométrique peut générer un signal de commande d'une action bidirectionnelle et graduelle en fonction de l'intensité de la force exercée sur le dispositif isométrique.

Si l'on souhaite obtenir une telle action bidirectionnelle et graduelle sur un autre axe de l'espace de navigation, il est possible d'équiper le dispositif de navigation d'un second potentiomètre.

Selon un troisième mode de réalisation de l'invention, le dispositif isométrique peut être directement constitué d'un capteur sensible à un effort selon trois directions. Un tel capteur est illustré par exemple dans le document EP 1 275 949.

Ce type de capteur de force comporte une tige rigide destinée à être sollicitée par un doigt de l'utilisateur et une tête reliée à la tige. Cette tête comporte un élément déformable qui porte des moyens de mesure, du type jauges de contrainte montées en pont de Wheatstone. Ces moyens de mesure permettent ainsi de générer des signaux dépendant de la déformation ou de la contrainte imposée à l'élément déformable par le biais de la tige rigide.

Ce type de capteur appelé "clou" est sensible sur deux de ses trois directions à une force bidirectionnelle exercée sur ces axes et, sur le troisième axe, à une force exercée selon uniquement une direction.

Un tel dispositif isométrique est ainsi adapté à générer des signaux de commande d'une action dans l'espace de navigation selon les trois dimensions de cet espace, une action selon l'un des axes de cet espace n'étant que monodirectionnelle.

Ces actions sont toutes graduelles dès lors qu'elles peuvent être dépendantes de la force exercée et mesurée au niveau du dispositif isométrique.

En associant ce dispositif isométrique au dispositif isotonique décrit précédemment, le dispositif de navigation permet d'accéder aux six degrés de liberté nécessaires pour la navigation dans un espace à trois dimensions.

Si l'on souhaite également obtenir une action bidirectionnelle sur le dernier axe de cet espace, il est possible d'associer, au capteur de force du type clou, un capteur tel que décrit précédemment constitué d'un bouton poussoir.

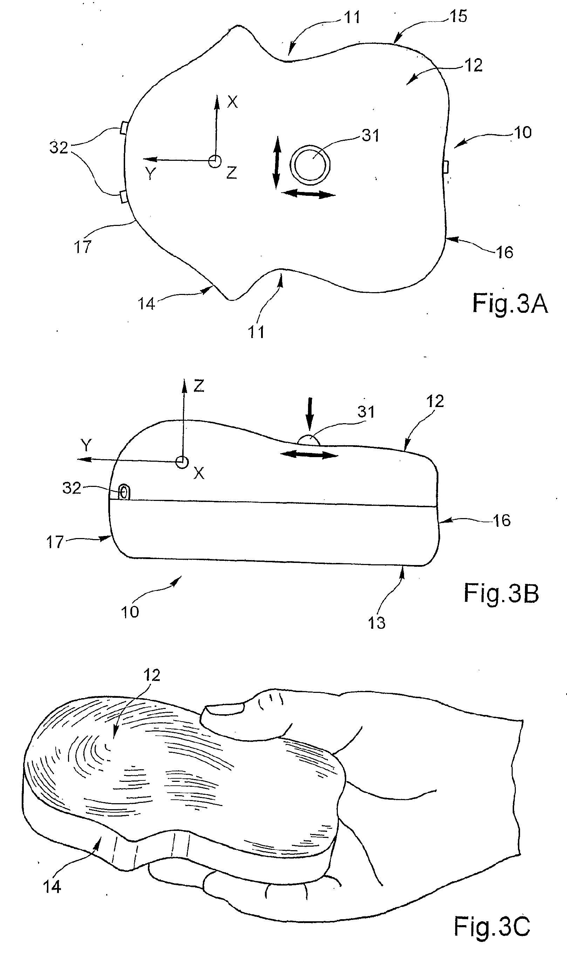

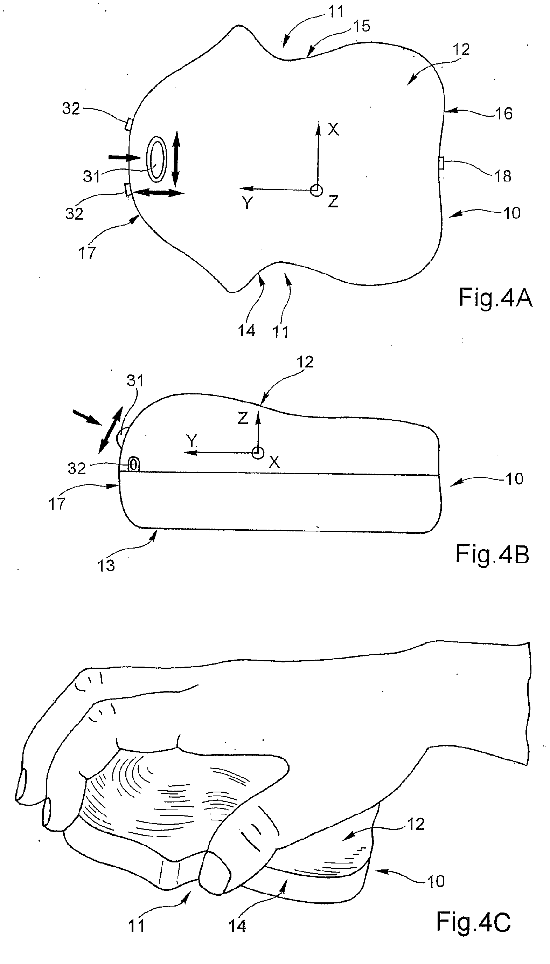

On va décrire à présent en référence aux figures 3A à 3C et 4A à 4C deux modes de réalisation pratique d'un tel dispositif autonome de navigation particulièrement bien adaptés à l'ergonomie de l'utilisateur.

Comme bien illustré sur les figures, le boîtier a sensiblement une forme parallélépipédique avec une face supérieure 12, une face inférieure 13 et quatre faces latérales 14, 15, 16 et 17.

De préférence, la face inférieure 13 est une face plane pour permettre de poser le dispositif de façon stable sur un plan de travail, bien que son utilisation soit réalisée en espace libre.

La face supérieure 12 peut éventuellement présentée un léger renflement pour faciliter la prise en main par l'utilisateur, notamment lorsque celui-ci saisit le dispositif par sa face supérieure 12, comme illustré à la figure 4C.

Les faces latérales 14 et 15 constituant les côtés du dispositif 10 peuvent présenter une encoche 11 pour faciliter la préhension et la position des doigts de l'utilisateur comme illustré par exemple à la figure 4C.

La face arrière 13 du dispositif 10 est sensiblement plane. Dans ces modes de réalisation, elle comporte un bouton marche/arrêt.

Dans ce mode de réalisation, le boîtier comporte plusieurs dispositifs isométriques 31, 32.

Le dispositif isométrique 31 est constitué d'un capteur de force du type clou sensible à une force exercée selon trois axes du dispositif 31. Comme bien illustré sur les figures 3A, 3B, 4A et 4B par les flèches, ce dispositif isométrique est sensible à deux actions bidirectionnelles et perpendiculaires l'une à l'autre dans le plan de montage du dispositif isométrique 31 et une action monodirectionnelle perpendiculaire à ce plan.

Dans le mode de réalisation illustré aux figures 3A à 3C, le dispositif isométrique est disposé sur la face supérieure 12 du boîtier. Ainsi, comme illustré à la figure 3C, ce dispositif est adapté à être actionné par le pouce d'un utilisateur qui tient le boîtier à la main. La tige du capteur de force est disposée perpendiculairement à la face supérieure 12 du boîtier.

Dans le mode de réalisation illustré aux figures 4A et 4C, le dispositif isométrique 31 est disposé sur une face latérale du boîtier, et ici sur la face avant 17 du boîtier.

Comme illustré à la figure 4C, ce dispositif est adapté à être actionné par un doigt de l'utilisateur tenant le boîtier dans une main, et par exemple par l'index ou le majeur. Ici, la tige du capteur de force est disposée perpendiculairement à la face latérale avant 17 du boîtier.

Bien entendu, à l'intérieur du boîtier 10 est incorporé un dispositif isotonique 20 tel que décrit précédemment permettant de détecter l'inclinaison du boîtier selon les trois axes de tangage, de roulis et de lacets.

Dans ces modes de réalisation, le dispositif autonome de navigation 10 comporte en outre deux boutons poussoirs 32 constituant des dispositifs isométriques supplémentaires permettant également de générer des signaux de commande d'une action dans un espace de navigation.

Ces boutons poussoirs 32 sont actionnés par les doigts de l'utilisateur tenant le boîtier.

On obtient ainsi un dispositif de navigation optimisé permettant d'offrir à l'utilisateur une gestuelle intuitive et une ergonomie dans le mouvement de sa main. Ce dispositif peut être manipulé par une seule main et les doigts de cette main, tout en offrant la richesse des possibilités de navigation dans un espace à trois dimensions.

On va décrire à présent des exemples de systèmes de navigation dans un espace à au moins trois dimensions mettant en oeuvre le dispositif de navigation décrit précédemment.

De manière générale, un système de navigation dans un espace à au moins trois dimensions conforme à l'invention comprend un dispositif autonome de navigation tel que décrit précédemment et des moyens de traitement adaptés à prendre en compte les signaux représentatifs de l'inclinaison du boîtier et le signal de commande issu du dispositif isométrique pour générer au moins une action dans l'espace à au moins trois dimensions.

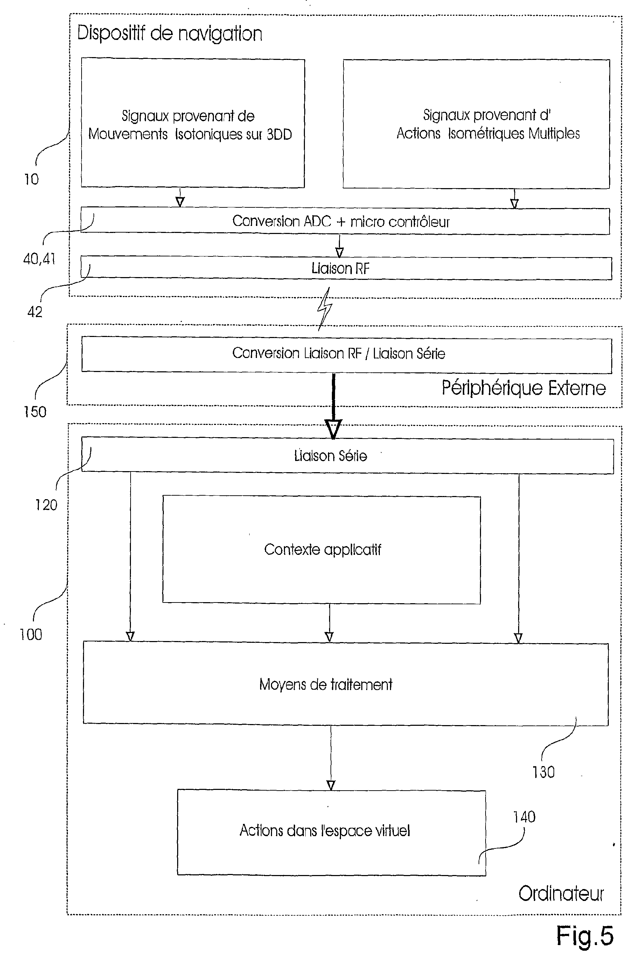

On va décrire tout d'abord en référence à la figure 5 un système de navigation dans un espace virtuel.

Un espace virtuel est constitué d'une base de données à plus de deux dimensions, permettant de représenter un espace réel. Ce type d'espace virtuel est notamment utilisé pour des jeux vidéo mais également pour des simulateurs. Il peut également être utilisé pour représenter des bases de données informatives, telles que des bases de données géographiques ou cartographiques.

Cet espace virtuel est défini à partir d'un contexte applicatif mémorisé dans un ordinateur 100.

Le système de navigation comporte ainsi un convertisseur 110 adapté à convertir la liaison radiofréquence en une liaison série. Ce convertisseur 110 permet de transmettre les signaux provenant des mouvements isotoniques sur le dispositif de navigation 10 et les signaux provenant d'actions sur les dispositifs isométriques équipant le dispositif de navigation 10 au travers d'une liaison série 120 de l'ordinateur 100. Ces signaux sont ainsi transmis aux moyens de traitement 130 ainsi que les données mémorisées dans le contexte applicatif.

Les moyens de traitement 130 sont adaptés à fusionner les données fournies par les capteurs et à analyser le contexte applicatif, et notamment le type de contenu à deux ou trois dimensions, le type de navigation à réaliser et éventuellement certains paramètres environnementaux tels que l'altitude.

Les moyens de traitement sont adaptés à partir des données fournies par les capteurs à calculer les angles de rotation du dispositif de navigation 10 et à déterminer un ensemble d'actions à réaliser en fonction des données reçues, des angles de rotation calculés, de l'analyse du contexte, et notamment du type de navigation à réaliser.

Les actions sont alors mises en oeuvre dans l'espace virtuel 140, se matérialisant par un déplacement d'un point de vue ou d'un objet sur une représentation virtuelle de l'espace visualisé par exemple sur un écran de l'ordinateur 100.

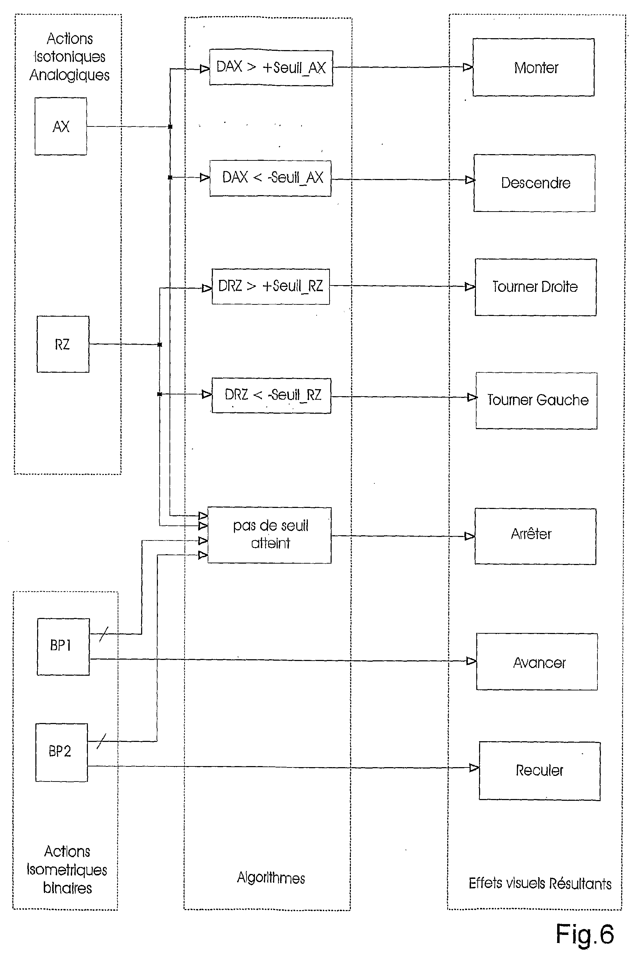

On va décrire à présent en référence aux figures 6 à 17 différents exemples de navigation dans un espace virtuel, et notamment dans un espace virtuel à trois dimensions.

Dans l'ensemble des méthodes de navigation décrites ci-après, on posera tout d'abord les définitions et références suivantes :
Pour le dispositif de navigation autonome 10, il est possible de considérer des valeurs de référence en entrée des moyens de traitement qui correspondent à une position de référence dans l'espace réel du dispositif de navigation 10.

On définit ainsi pour les accéléromètres 22 les données AXref, AYref et AZref, et pour les magnétomètres 23, les valeurs de référence MXref, MYref et MZref.

A partir de ces valeurs de référence des accéléromètres et magnétomètres sont calculées comme explicité précédemment les valeurs d'inclinaison du dispositif de navigation autour des trois axes de l'espace, correspondant aux rotations RXref, RYref et RZref.

Lorsque les capteurs isométriques sont sensibles à une force, telle que un potentiomètre ou un capteur de force du type clou, il est également possible de déterminer en entrée des valeurs de référence VP1ref et VP2ref pour les potentiomètres ou CLXref, CLYref et CLZref pour un capteur de force du type clou, correspondant à l'amplitude de la force mesurée selon les trois axes X, Y et Z du capteur de force du type clou dans la position de référence du dispositif de navigation 10.

A ces données d'entrée de référence fournies aux moyens de traitement correspond une position de référence dans l'espace virtuel.

Quel que soit le système utilisé, dans un espace virtuel à trois dimensions, on utilise des coordonnées angulaires ROTX, ROTY et ROTZ représentant les trois rotations sur les axes X, Y et Z définissant les trois dimensions de l'espace virtuel, et les positions POSX, POSY et POSZ sur les trois plans X, Y et Z de l'objet à considérer dans l'espace virtuel délimité par l'application.

En pratique, lorsque la navigation dans l'espace virtuel consiste à explorer cet espace, l'utilisateur est assimilé à un spectateur à l'intérieur même de l'espace virtuel. Les coordonnées angulaires et les positions ainsi déterminées en sortie des moyens de traitement sont utilisées pour modifier la position d'une caméra au travers de laquelle est visualisé l'espace virtuel par le spectateur.

Lorsque la navigation dans l'espace virtuel consiste à observer ou à manipuler un objet virtuel dans cet espace, l'utilisateur est assimilé à un spectateur extérieur à l'espace virtuel lui-même. Les données de sortie sont alors appliquées sur la position de l'objet lui-même par rapport à l'espace virtuel.

On définit ainsi comme valeurs de sortie une position de référence de la caméra ou de l'objet dans l'espace virtuel correspondant aux valeurs de sortie de position angulaire ROTXref, ROTYref et ROTZref, et de position POXref, POSYref et POSZref.

En outre, on définit ci-après les variables suivantes :
DAX : différence entre la valeur mesurée et la valeur mémorisée à l'initialisation de l'application sur un des capteurs isotoniques sensibles à une rotation sur l'axe X : DAX = AX-AXref.

On notera qu'il est possible également d'utiliser les différences MX-MXref ou RX-RXref. Pour des raisons de robustesse, il est cependant préférable d'utiliser la valeur brute issue de l'accéléromètre.

DAY : différence entre la valeur mesurée et la valeur mémorisée à l'initialisation de l'application sur un des capteurs sensibles à une rotation sur l'axe Y : DAY = AY-AYref.

Comme précédemment, on pourrait également utiliser MY-MYref ou RY-RYref.
DRX : Ecart entre la valeur de l'angle sur l'axe X calculée en instantanée et celle mémorisée à l'initialisation de l'application.
DRY : Ecart entre la valeur de l'angle sur l'axe Y calculée en instantanée et celle mémorisée à l'initialisation de l'application.
DRZ : Ecart entre la valeur de l'angle sur l'axe Z calculée en instantanée et celle mémorisée à l'initialisation de l'application.
DPT : Ecart entre la valeur mesurée sur PT et celle mémorisée à l'initialisation de l'application.
DCLX : Ecart entre la valeur mesurée sur CLX et celle mémorisée à l'initialisation de l'application.
DCLY : Ecart entre la valeur mesurée sur CLY et celle mémorisée à l'initialisation de l'application.
DCLZ : Ecart entre la valeur mesurée sur CLZ et celle mémorisée à l'initialisation de l'application.
KV : coefficient multiplicateur pour la vitesse de déplacement dépendant de l'altitude POSZ, c'est-à-dire de la position de l'objet sur l'axe vertical Z dans l'espace virtuel : KV = POSZ / 500 par exemple.

Bien entendu d'autres coefficients multiplicateurs à fonction plus développée pourraient être utilisés mettant en oeuvre à la fois l'altitude et la hauteur du sol pour calculer la vitesse.
KZ : coefficient multiplicateur de vitesse pour le déplacement en altitude. KZ = POSZ / 1000 par exemple.
KL : coefficient multiplicateur de vitesse pour le déplacement latéral dépendant de l'altitude. KL = POSZ / 2000 par exemple.
VITVOL : paramètre de vitesse de vol. Ce paramètre peut être fixe et prédéterminé par le système si les capteurs isométriques sont des boutons poussoirs. Il peut également être variable et dépendre de la valeur en sortie d'un potentiomètre ou d'une des valeurs CLX, CLY ou CLZ en sortie d'un capteur de force du type clou. Ainsi, ce paramètre de vitesse de vol peut être dans ce cas modifié en fonction de l'intensité de la force exercée par l'utilisateur sur le dispositif isométrique, selon un axe d'application de cette force.
DeltaX : orientation verticale de la caméra. Dans plusieurs types d'application, et afin d'augmenter le confort visuel de l'utilisateur assis devant son ordinateur, la position de la caméra est fixée avec une inclinaison vers le bas d'une dizaine de degrés, afin d'augmenter le champ de vision durant le déplacement dans l'espace virtuel. Cette orientation permet de mieux visualiser l'espace virtuel. Dans ce cas, la coordonnée angulaire ROTX = DeltaX.
DeltaY : orientation horizontale de la caméra. Dans certaines applications, il est préférable que la caméra reste horizontale afin d'augmenter le confort visuel. Dans ce cas, il ne s'agit pas de simuler un déplacement, tel qu'un vol d'avion mais plutôt de rendre ce déplacement le plus agréable possible, sans tenir compte des facteurs réels qui peuvent mener à une modification horizontale du point de vue. L'orientation horizontale de la caméra est alors fixée de telle sorte que sa coordonnée angulaire ROTY = DeltaY. Dans d'autres types d'application, l'inclinaison de la caméra définie par sa coordonnée angulaire ROTY peut être variable.
SeuilAx : seuil de réglage sur l'axe X du dispositif de navigation. Ce seuil permet d'ignorer les petits mouvements du dispositif de navigation tant qu'il reste inférieur à ce seuil, afin de conserver une position stable dans la navigation dans l'espace virtuel et de ne pas réagir au tremblement intempestif de l'utilisateur manipulant le dispositif autonome de navigation.
SeuilAy : seuil de réglage sur l'axe Y du dispositif autonome de navigation, permettant comme précédemment d'ignorer le tremblement intempestif de l'utilisateur.

L'utilisation de ces seuils de réglage permet de privilégier le confort lors de la navigation dans un espace virtuel éventuellement au détriment du réalisme.
CoefAx : coefficient permettant de régler le déplacement sur l'axe vertical de façon proportionnel à l'altitude. Dans les exemples d'application décrit ci-après, on utilise l'altitude réelle. A titre de variante, on peut également utiliser la hauteur par rapport au sol moyennant un seuil en dessus duquel l'altitude réelle est prise en compte.
PasAzimuth : pas élémentaire de déplacement dans le cas d'une rotation dans le plan horizontal, autour de l'axe vertical Z.
PIVOT : variable permettant d'indiquer la réalisation d'un changement de direction immédiat.
DeltaZ : écart entre les positions angulaires instantanée et initiale de la caméra mesurée dans le plan horizontal.
ResultAngleMax : valeur maximale que peut prendre un angle de rotation calculée, soit par exemple 360 degrés.
ResultAngleMin : valeur minimale que peut prendre un angle de rotation calculée, soit par exemple 0 degré.
SensRotation : définit à un moment donné le sens de rotation de la caméra.

On va décrire tout d'abord en référence à la figure 6 un procédé de navigation dans un espace virtuel à trois dimensions. Dans ce mode de réalisation, il s'agit de simuler un déplacement de type vol d'oiseau permettant d'explorer un environnement virtuel. Il s'agit ainsi de modifier le point de prise de vue et l'angle d'une caméra au travers de laquelle l'utilisateur visualise l'espace virtuel.

Ce mode de consultation doit donner la possibilité de s'arrêter, d'avancer ou reculer, de tourner et de monter et descendre dans l'espace virtuel.

Dans cet exemple de réalisation, comme bien illustré à la figure 6, les actions isotoniques réalisées sur le dispositif de navigation 10 génèrent notamment les valeurs d'entrée AX et RZ utilisées pour monter, descendre, tourner à droite ou tourner à gauche.

Dans ce mode de réalisation, les actions isométriques sont réalisées par l'intermédiaire de deux boutons poussoirs BP1 et BP2 dont l'actionnement permet d'engendrer un signal de commande pour avancer ou reculer dans l'espace virtuel.

Le signal de commande associé aux boutons poussoirs BP1 et BP2 permet de générer un déplacement vers l'avant ou vers l'arrière dans le plan horizontal de l'espace virtuel. Si aucun des boutons poussoirs BP1 ou BP2 n'est actionné par l'utilisateur, il n'y a pas de déplacement dans l'espace virtuel.

Le changement d'altitude s'effectue en modifiant l'inclinaison du dispositif autonome de navigation 10 autour de l'axe X, provoquant ainsi la modification de la valeur AX. On réalise la comparaison de la différence DAX avec un seuil préfixé SeuilAX.

Ainsi, le changement d'altitude s'effectue en inclinant l'avant du dispositif de navigation 10 vers le haut pour monter et vers le bas pour descendre. Lorsque le second bouton poussoir BP2 est actionné et qu'ainsi une action de recul est effectuée, le sens de déplacement sur l'axe d'altitude se trouve inversé pour des raisons d'ergonomie et de logique humaine.

Dans ce mode de réalisation afin de faciliter la visualisation, l'axe d'inclinaison vertical de la caméra est fixé à quinze degrés vers le sol et son inclinaison est fixée à zéro degré pour améliorer le confort visuel lors de la navigation dans l'espace virtuel.

En outre, les virages à droite et à gauche dans l'espace virtuel sont commandés en fonction de l'azimut, c'est-à-dire de la rotation RZ autour de l'axe Z. Ainsi, les virages s'effectuent en tournant le dispositif de navigation 10 dans un plan horizontal comme pour une boussole. Lorsque ce dispositif sort d'une zone dite de repos, c'est-à-dire que la valeur de l'angle de rotation RZ dépasse en absolue une valeur de seuil prédéterminé SeuilRz, un signal de commande en rotation à gauche ou à droite dans l'espace virtuel est mis en oeuvre tant que le dispositif de navigation 10 ne revient pas dans sa position de repos.

La vitesse de déplacement en avance ou en recul dans le plan horizontal dépend des paramètres déterminés précédemment, tel que VITVOL.

On donne ci-après à titre d'exemple un algorithme de traitement des signaux d'entrée délivrés par le dispositif de navigation permettant de générer des signaux de commande en sortie pour réaliser la navigation dans l'espace virtuel.

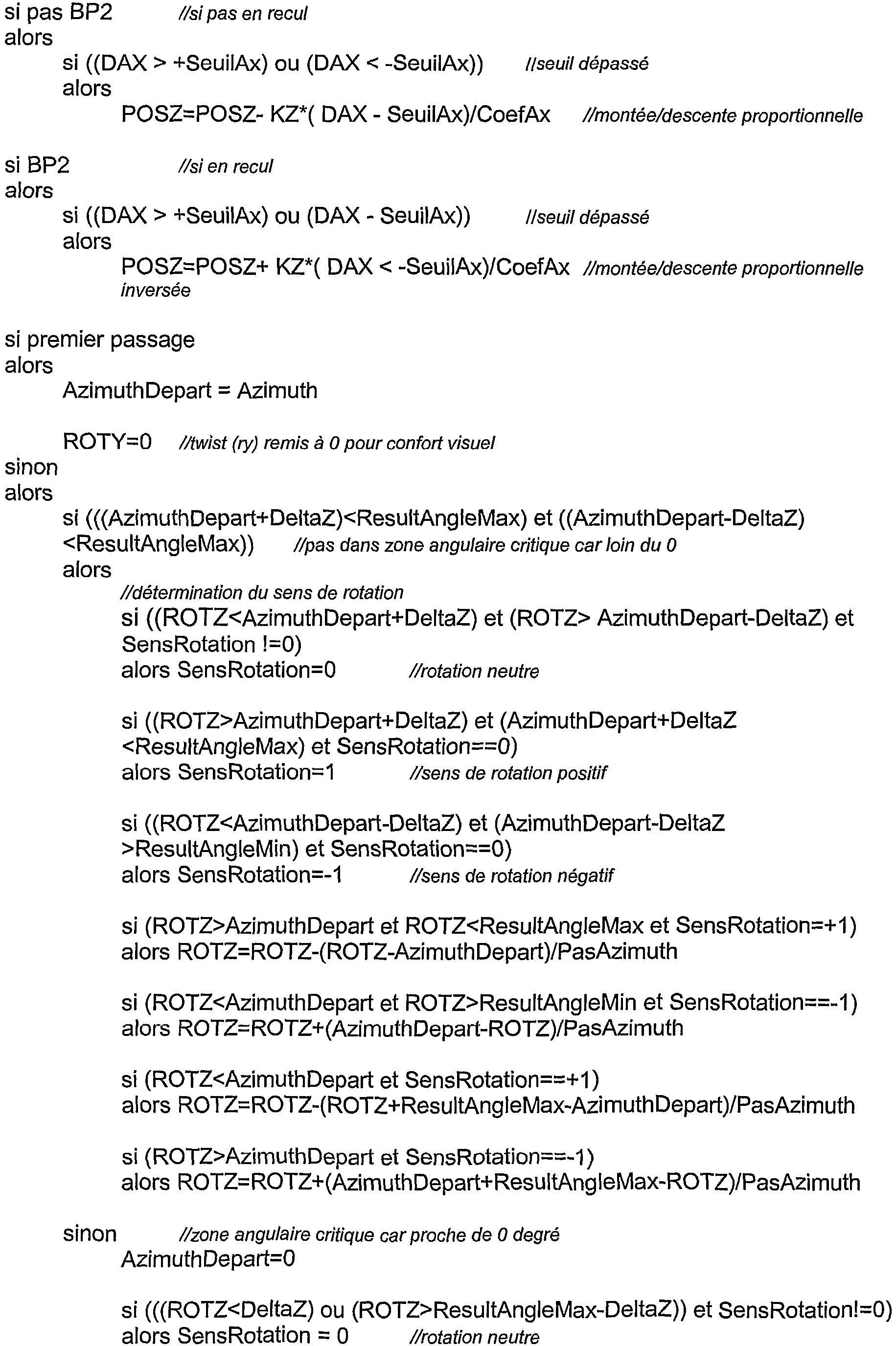

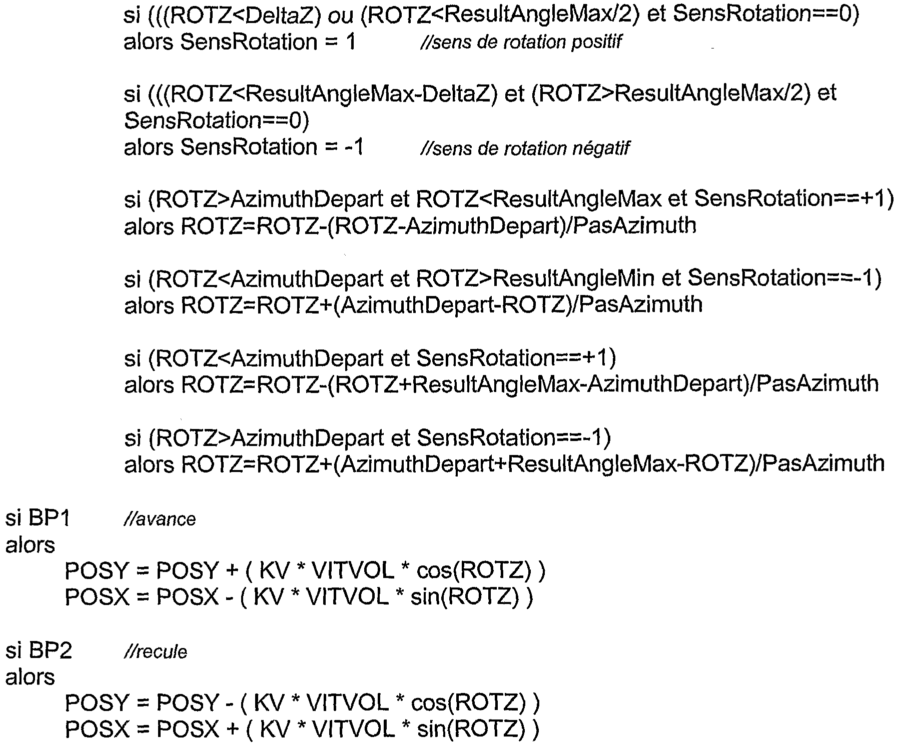

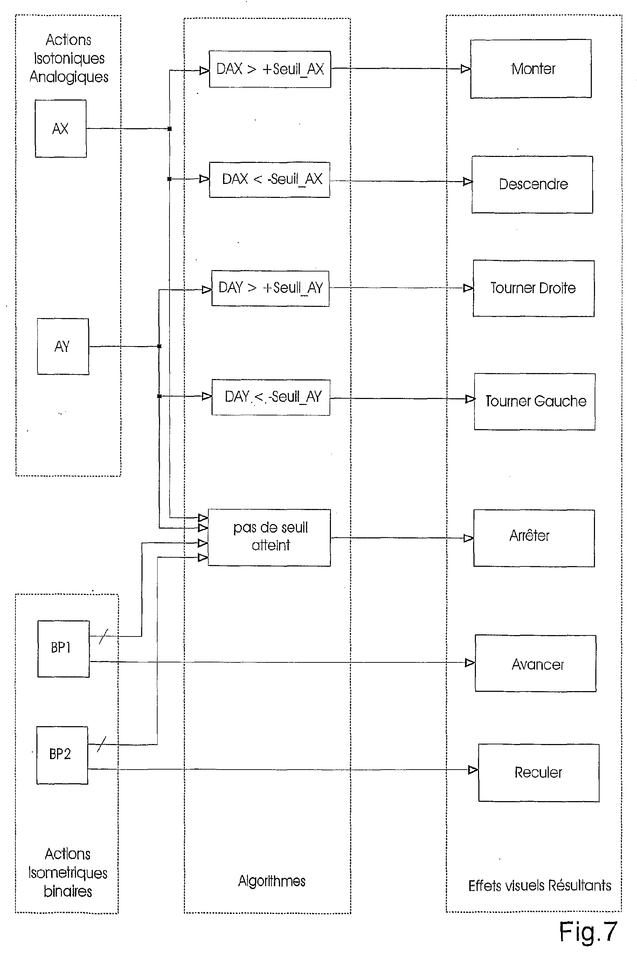

Ce mode de réalisation peut être quelque peu modifié comme illustré à la figure 7.

Il s'agit alors de simuler un déplacement du type vol d'oiseau avec les mêmes possibilités de déplacement dans un espace virtuel.

Contrairement au mode de réalisation décrit précédemment dans lequel les virages à droite et à gauche dans le plan horizontal s'effectuent en tournant le dispositif de navigation 10 dans un plan horizontal, les virages s'effectuent ici en penchant latéralement le dispositif autonome 10, c'est-à-dire en modifiant son inclinaison par rapport à l'axe Y.

Ainsi, on considère comme données d'entrée au niveau des actions isotoniques la valeur AY donnée par l'accéléromètre associé à l'axe Y. Lorsque la différence DAY dépasse en valeur absolue un seuil de référence SeuilAy, un déplacement en rotation vers la droite ou vers la gauche est appliqué à la caméra, tant que le dispositif de navigation 10 ne revient pas à sa position de repos, proche de la position de référence de départ.

Un exemple de l'algorithme mis en oeuvre par les moyens de traitement est donné ci-après :

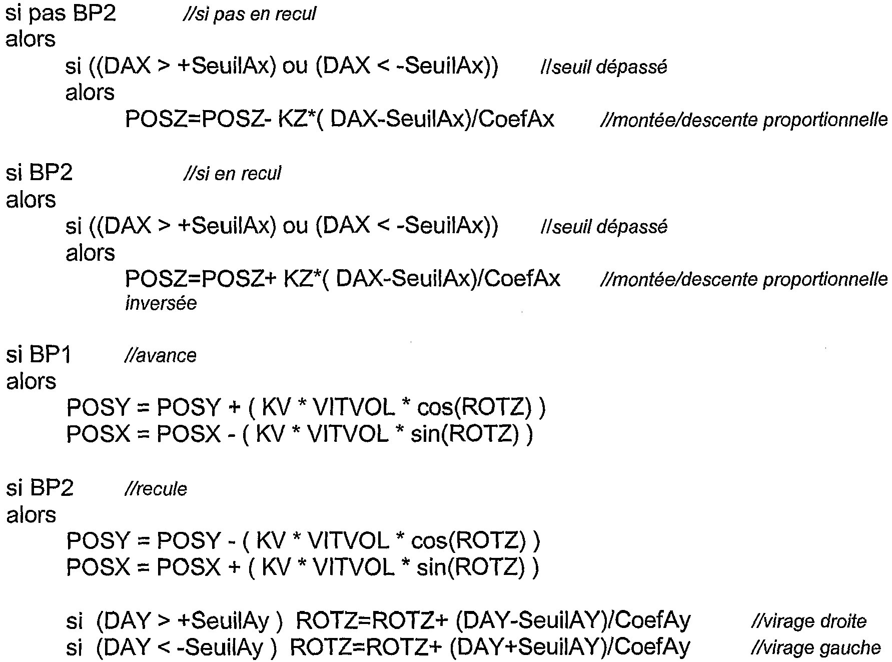

On peut éventuellement envisager de combiner les deux modes de réalisation décrits précédemment.

Afin d'améliorer le confort visuel, la rotation verticale et l'inclinaison de la caméra sont fixées.

La rotation peut s'effectuer à la fois en penchant latéralement le dispositif de navigation, c'est-à-dire en modifiant son angle de rotation par rapport à l'axe Y, et en tournant latéralement le dispositif de navigation dans son plan, c'est-à-dire en modifiant son angle de rotation par rapport à l'axe Z.

Un exemple de cet algorithme de traitement mis en oeuvre dans ce mode de réalisation est donné ci-après :

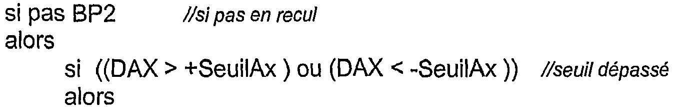

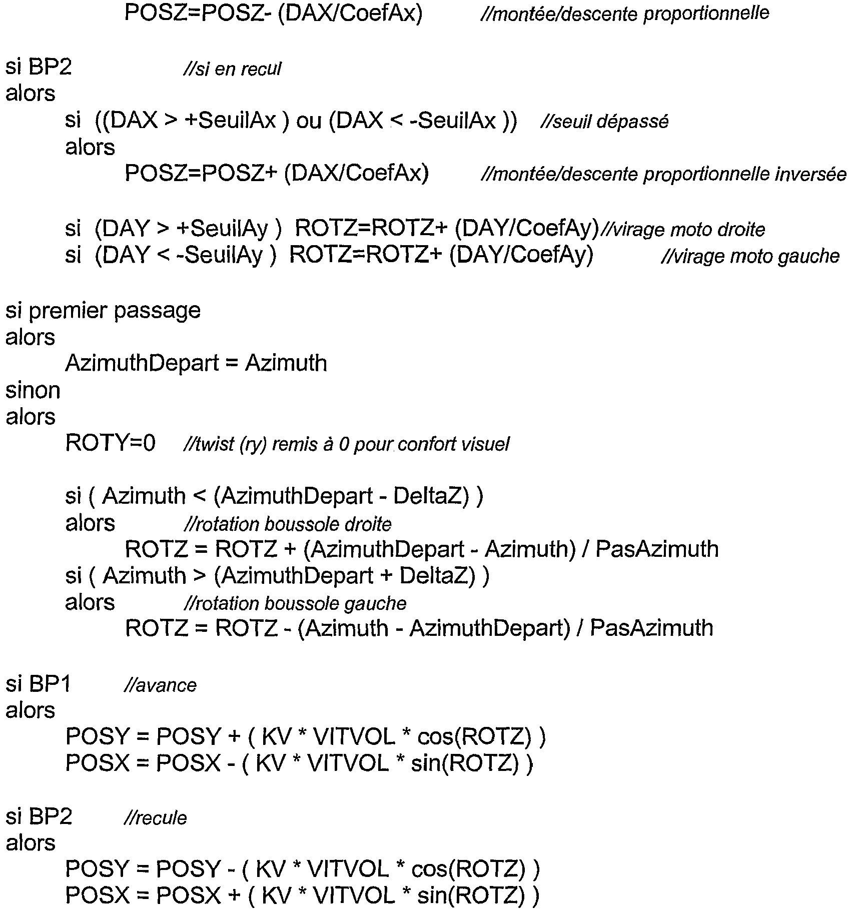

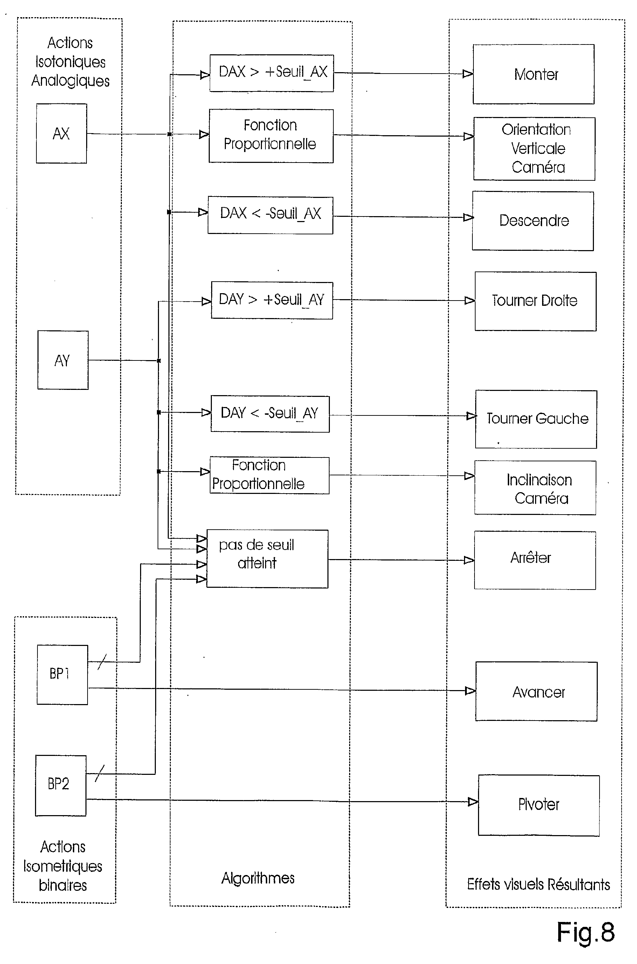

Ce type de consultation peut encore être perfectionné comme illustré sur la figure 8 afin de simuler un vol d'avion.

Ce mode de consultation a la particularité de modifier l'orientation de la caméra pendant le vol contrairement aux deux modes de réalisation décrits précédemment dans laquelle l'orientation de la caméra est fixe afin d'améliorer le confort visuel de l'utilisateur.

A contrario, dans ce mode de réalisation, on souhaite privilégier le réalisme de la navigation dans l'espace virtuel.

En outre, s'agissant de simuler un vol d'avion, le recul de la caméra n'est pas souhaitable. Cette action doit être remplacée par un demi-tour immédiat de la caméra sur elle-même dès l'action sur l'un des boutons poussoirs, et ici BP2, par l'utilisateur.

Pour un meilleur confort visuel, l'angle d'inclinaison de la caméra n'est pas modifié en le couplant directement à l'angle d'inclinaison du dispositif de navigation autour de l'axe X mais dans un rapport ½ par exemple.

En revanche, en ce qui concerne l'inclinaison de la caméra par rapport à l'axe Y, il est préférable de maintenir cet angle fixe afin de favoriser le confort visuel de l'utilisateur.

Enfin, dans ce mode de réalisation, les virages à droite et à gauche sont réalisés comme précédemment à partir de l'inclinaison sur la droite ou la gauche par rapport à l'axe Y du dispositif de navigation 10, la vitesse de rotation autour de l'axe Z de l'espace virtuel dépendant en outre de l'amplitude de cette inclinaison par rapport à l'axe Y du dispositif de navigation 10.

On donne ci-après un exemple d'un algorithme mis en oeuvre par les moyens de traitement pour commander ce type de déplacement dans un espace virtuel.

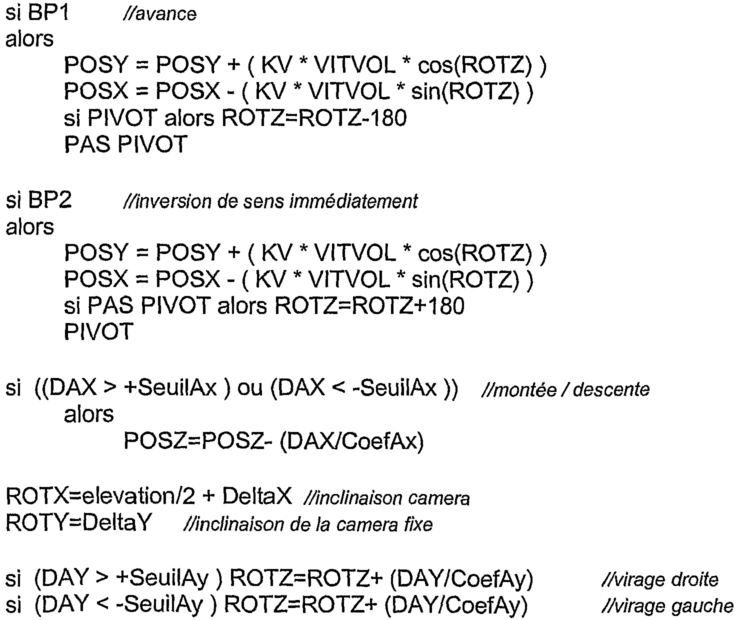

Dans les trois modes de réalisation décrits précédemment, le dispositif de navigation comporte comme dispositif isométrique deux boutons poussoirs BP1, BP2.

Comme indiqué précédemment, d'autres types de dispositif isométrique peuvent être utilisés, et notamment un potentiomètre PT, ou encore un capteur de force de type clou.

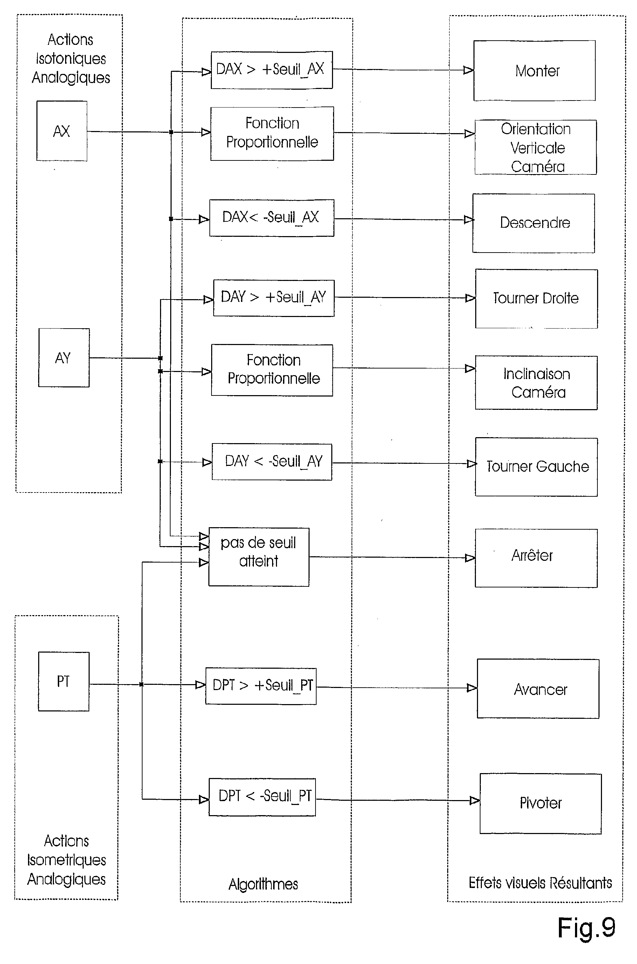

Dans un tel cas, et comme illustré à la figure 9, pour le mode de réalisation décrit précédemment en référence à la figure 8, l'action sur le dispositif isométrique n'est plus une action binaire du type tout ou rien mais une action analogique.

Ainsi, le signal généré par un potentiomètre est analysé de la même manière que les signaux fournis par les dispositifs isotoniques. En particulier, la différence de la valeur mesurée en sortie du potentiomètre par rapport à une valeur de référence fixée à l'initialisation du système est comparée à une valeur de seuil prédéterminée SeuilPT, de telle sorte qu'en fonction du résultat de cette comparaison, une action d'avance ou de recul (ou de demi-tour) est mise en oeuvre dans l'espace virtuel de navigation.

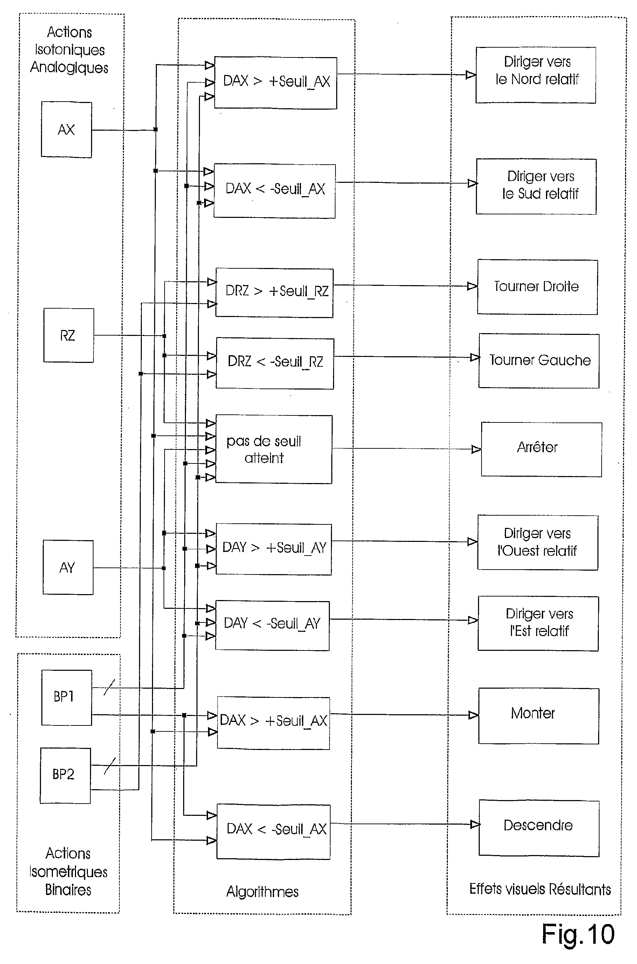

On va décrire à présent en référence à la figure 10 un autre mode de réalisation dans lequel la navigation dans l'espace virtuel simule le survol d'un satellite.

Ce type de consultation doit donner la possibilité de s'arrêter, de se déplacer vers les quatre points cardinaux relatifs à l'écran de visualisation de l'espace virtuel, de tourner, de monter ou de descendre.

Dans ce mode de réalisation, le déplacement sur l'écran de visualisation est paramétré de telle sorte que le nord relatif correspond par exemple au haut de l'écran, le sud relatif correspondant au bas de l'écran et l'ouest et l'est relatif correspondant respectivement à la gauche et à la droite de l'écran.

Le déplacement vers le nord relatif s'effectue par exemple en inclinant vers le bas l'avant du dispositif de navigation 10, le déplacement vers sud relatif s'effectuant en inclinant vers le bas l'arrière du dispositif de navigation 10. Le déplacement vers l'ouest relatif s'effectue en inclinant le dispositif de navigation 10 vers la gauche et le déplacement vers l'est relatif s'effectue en inclinant le dispositif de navigation 10 vers la droite.

Ainsi, en fonction de l'inclinaison autour des axes horizontaux X et Y du dispositif de navigation 10, le déplacement vers les quatre points cardinaux peut être obtenu. Pour calculer la vitesse de déplacement, on utilise le coefficient multiplicateur KV définit précédemment, dont la valeur peut être fixée dans ce mode de réalisation à KV = POSZ / 2000, dépendant ainsi de la position en altitude.

S'agissant d'un mode de consultation du type survol de satellite, ce dernier est considéré comme regardant vers le sol. La caméra est ainsi tourner vers le sol de telle sorte que la valeur ROTX = - 90°.

Comme précédemment, la rotation vers la droite ou vers la gauche peut être obtenue à partir de la valeur de la rotation RZ autour de l'axe Z du dispositif de navigation 10.

Par ailleurs, l'appui sur l'un des deux boutons poussoirs équipant le dispositif de navigation 10, et ici sur le bouton poussoir BP1, modifie la position verticale de la caméra en fonction de l'inclinaison vertical du dispositif de navigation 10. En pratique, si l'avant du dispositif de navigation 10 est incliné vers le bas, on effectue une descente en altitude et si l'avant du dispositif de navigation 10 est incliné vers le haut on effectue une montée en altitude.

Les actions pour tourner à droite ou à gauche ne sont mises en oeuvre qu'avec appui simultané sur le bouton poussoir BP2.

On peut ainsi optimiser le confort de l'utilisateur en décorellant les différents déplacements possibles.

En particulier, dans ce type de navigation, on peut distinguer deux phases, la phase de recherche et la phase de consultation.

Dans la phase de recherche, on utilise principalement un déplacement vers les quatre points cardinaux. Dans la phase de consultation, on utilise au contraire la rotation vers la droite et la rotation vers la gauche.

L'appui sur le bouton poussoir BP1 verrouille le déplacement selon les points cardinaux, de telle sorte que l'utilisateur peut parfaitement positionner la carte visualisée comme il le souhaite.

Pour le déplacement vertical, et ainsi le choix de la hauteur de consultation, l'utilisateur peut dans chacune des phases avoir besoin de modifier son point de vue pour optimiser le confort visuel : il est ainsi préférable de bloquer la rotation vers la gauche et vers la droite et les déplacements horizontaux au moyen du bouton poussoir BP2.

On indique ci-après à titre d'exemple un algorithme mis en oeuvre par les moyens de traitement pour calculer à partir des valeurs d'entrée les signaux de commande de sortie permettant la navigation dans l'espace virtuel.

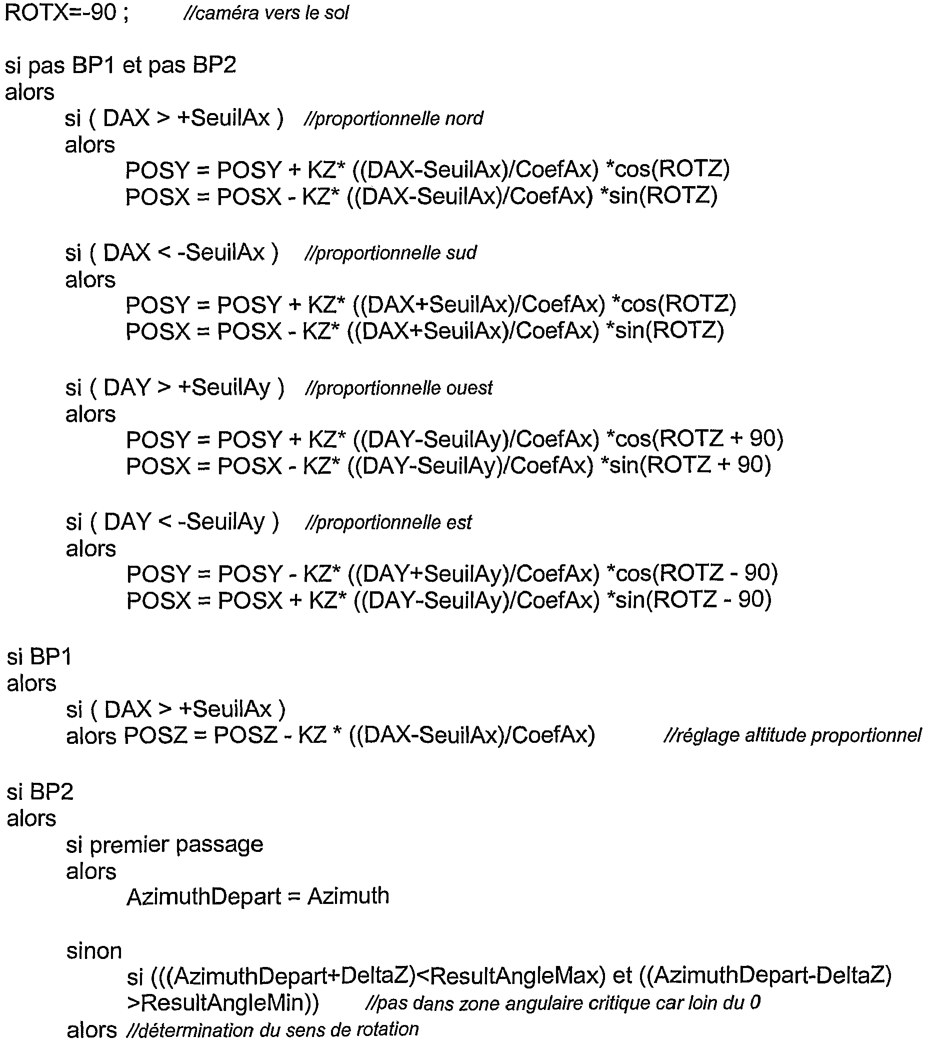

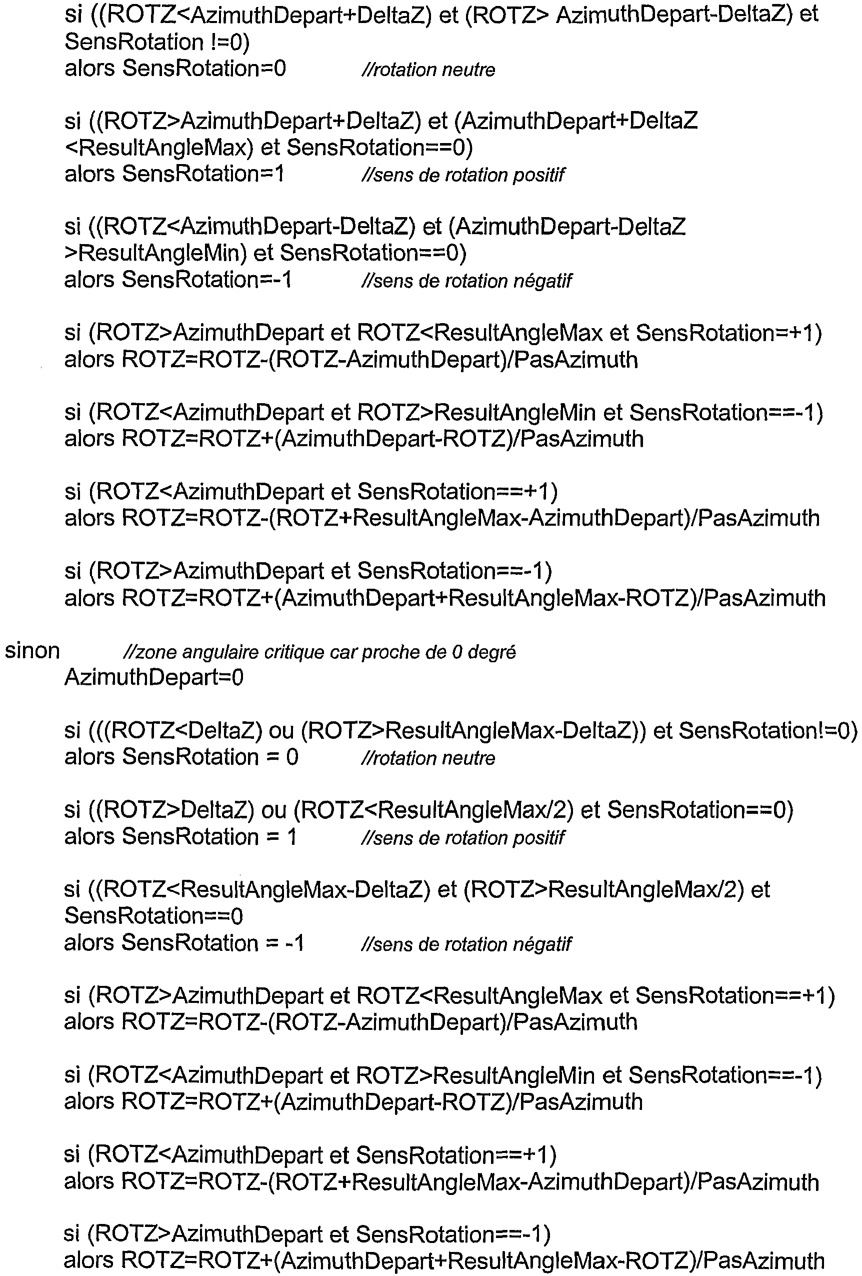

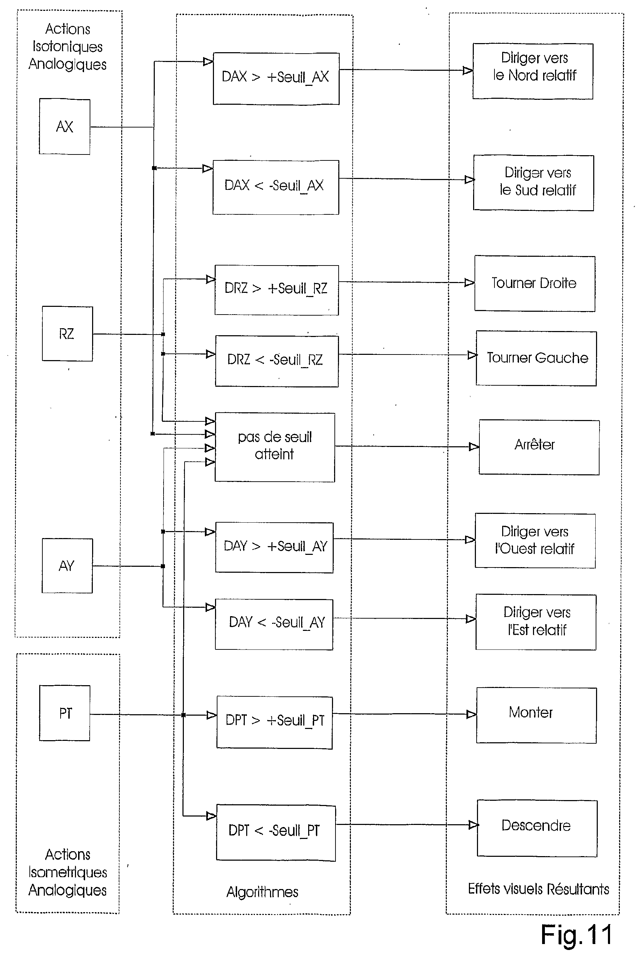

Pour la même application, on a illustré sur la figure 11 l'algorithme de traitement mis en oeuvre lorsque les boutons poussoirs BP1 et BP2 sont remplacés par un dispositif isométrique sensible à une force telle qu'un potentiomètre ou un capteur de force de type clou.

Dans un tel cas, les actions pour monter ou descendre en altitude peuvent être commandées uniquement grâce à la valeur mesurée en sortie du potentiomètre et à la comparaison de la différence de cette valeur avec une valeur de référence et une valeur de seuil prédéterminée SeuilPt. Il en est de même si le potentiomètre est remplacé par un capteur du type clou, à partir de la valeur CLX par exemple mesurée sur un axe X de déformation du clou.

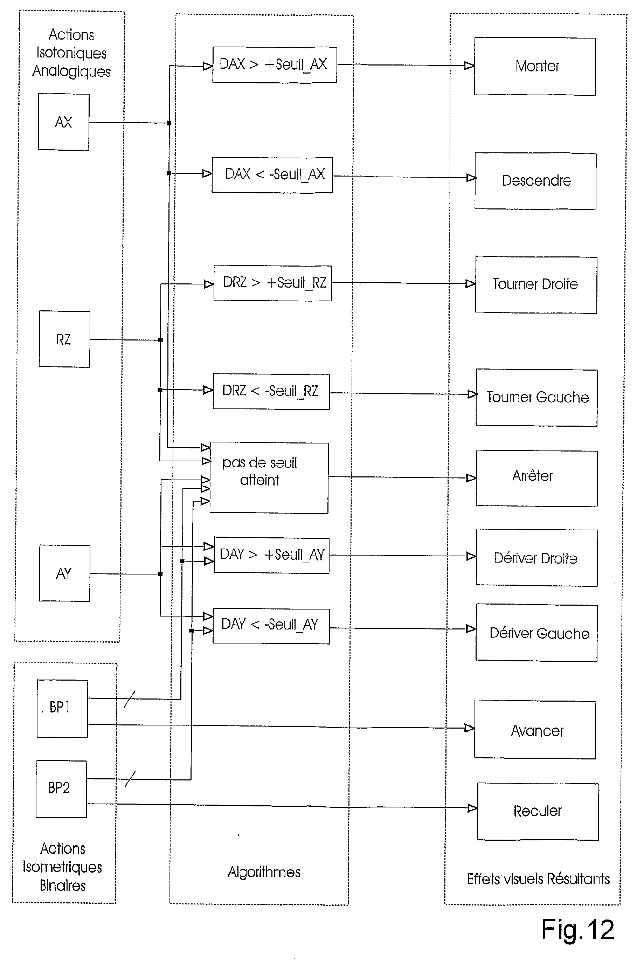

On va décrire à présent en référence à la figure 12 un autre de mode réalisation de l'invention dans lequel le déplacement dans l'espace virtuel est du type hélicoptère.

Dans ce type de déplacement, il est nécessaire également d'avoir la possibilité de s'arrêter, d'avancer ou reculer, de monter ou descendre, de tourner sur place ou de tourner en mouvement. Il est aussi nécessaire d'avoir la possibilité de pouvoir tourner autour d'un point particulier.

Pour les déplacements latéraux dans le plan XY horizontal de l'espace virtuel, la vitesse de déplacement est dépendante de l'altitude et on utilise à cet égard le coefficient multiplicateur KV dont la valeur peut être égale à KV = POSZ / 1000.

Comme déjà explicité précédemment, les actions de monter et descendre peuvent être obtenues en déplaçant le dispositif de navigation 10 par rapport à son axe X, les actions pour tourner à droite ou tourner à gauche peuvent être obtenues en réponse à un déplacement en rotation autour de l'axe Z du dispositif de navigation 10 et des actions de dérive à droite ou de dérive à gauche peuvent être obtenue en inclinant le dispositif par rapport à l'axe horizontal Y.

En combinant la rotation du dispositif de navigation autour de l'axe Z et son inclinaison par rapport à l'axe Y, il est possible d'obtenir une rotation à droite et une dérive à gauche ou une rotation à gauche et une dérive à droite permettant d'effectuer une rotation autour d'un point tout en conservant ce point en ligne de mire dans l'espace virtuel.

Comme dans les modes de réalisation décrits précédemment pour la simulation d'un vol d'oiseau, les actions sur les dispositifs isométriques du type boutons poussoirs BP1 ou BP2, éventuellement remplacés par un capteur de force du type potentiomètre ou capteur de force du type clou, permettent de générer les actions de déplacement vers l'avant ou vers l'arrière dans l'espace virtuel.

Un exemple d'un algorithme mis en oeuvre par les moyens de traitement dans ce mode de réalisation est donné ci-après :

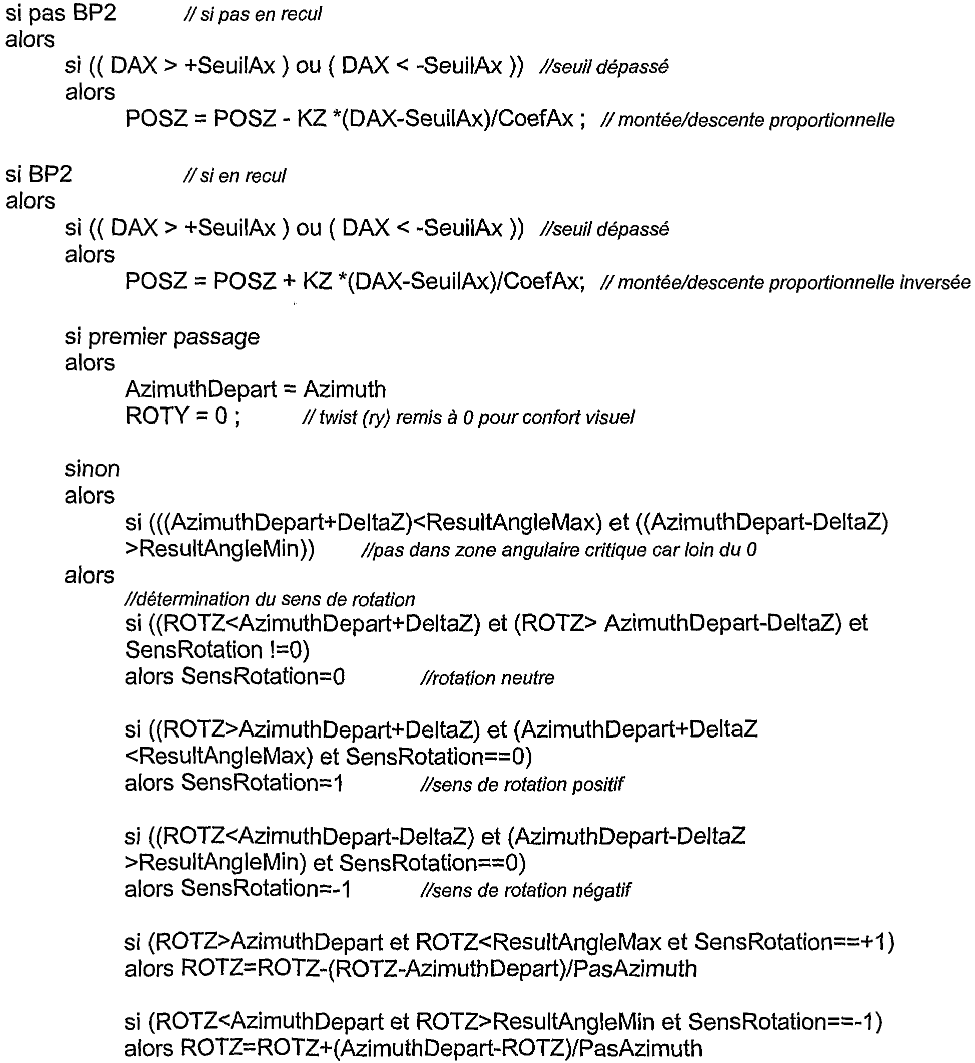

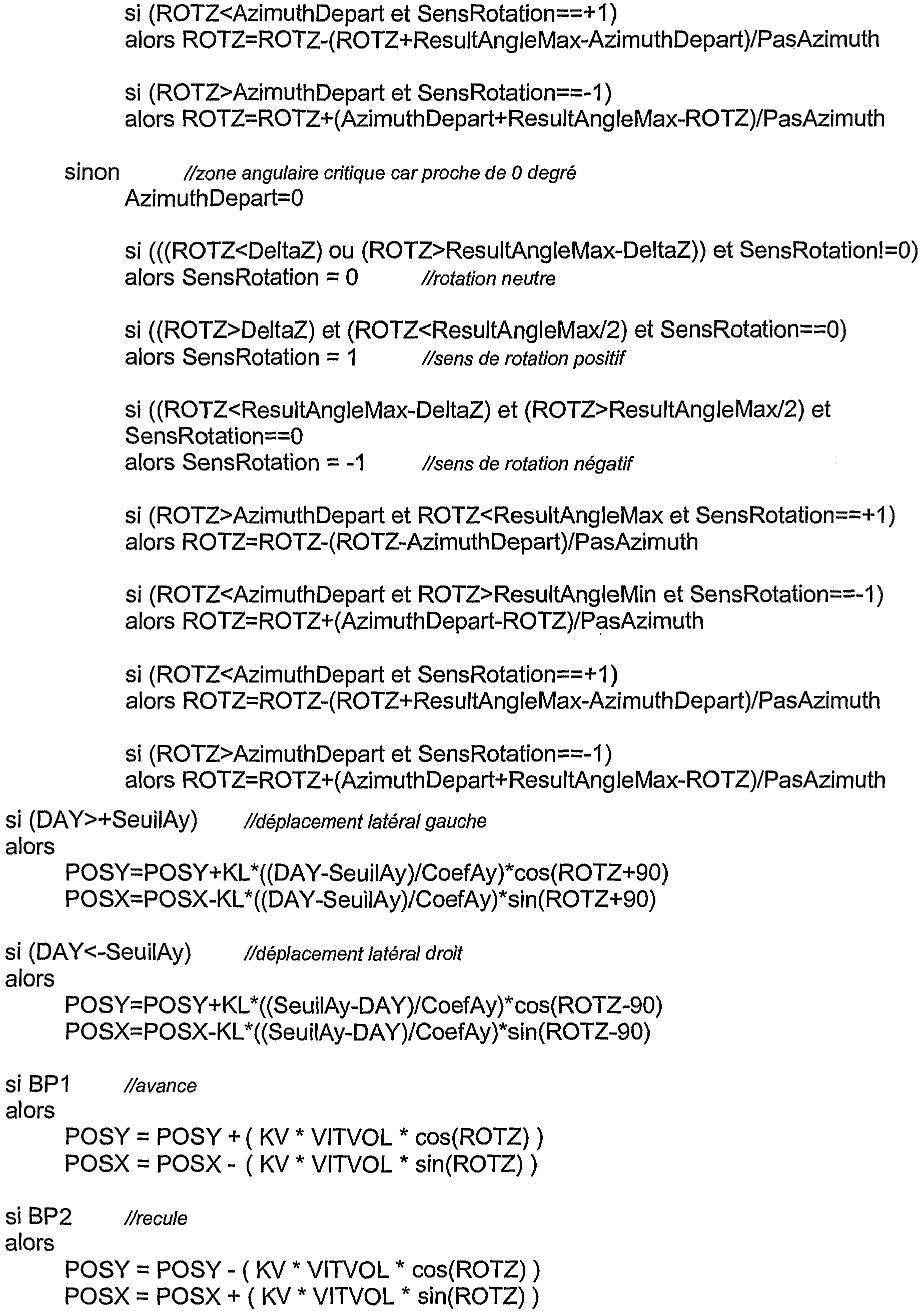

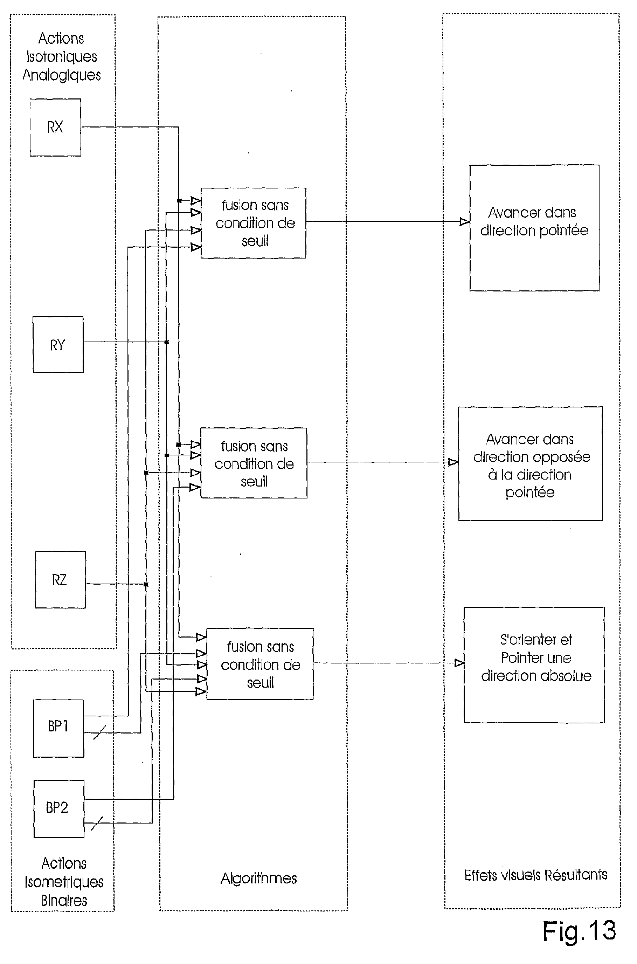

On va décrire à présent en référence à la figure 13 un autre mode de réalisation de l'invention dans lequel la navigation dans l'espace virtuel permet d'orienter la caméra de la même façon que le dispositif de navigation autonome manipulé par l'utilisateur. Cette orientation est réalisée de façon absolue par rapport au nord magnétique, afin de pouvoir se diriger vers un point précis dépendant de l'orientation du dispositif de navigation lorsqu'une action est réalisée sur un des dispositifs isométriques du dispositif de navigation. On obtient ainsi un type de navigation à la manière d'un pointeur.

Afin d'améliorer la précision de la visée, il est possible de prévoir dans l'application une mire de visée.

Dans ce mode de réalisation, les valeurs d'angle calculées autour des différents axes X, Y, Z du dispositif de navigation 10, correspondant aux angles de rotation RX, RY et RZ, sont directement affectées aux angles de la caméra dans l'espace virtuel.

Ainsi les coordonnées angulaires ROTX, ROTY et ROTZ de la caméra sont égales aux valeurs de l'élévation RX, du twist RY et de l'azimut RZ du dispositif de navigation 10.

En fonction de l'actionnement de l'un ou l'autre des boutons poussoirs BP1 ou BP2, une action de déplacement dans la direction pointée et une direction de déplacement dans la direction opposée à la direction pointée sont mises en oeuvre.

Un exemple d'algorithme de traitement mis en oeuvre dans ce mode de réalisation est donné ci-après :

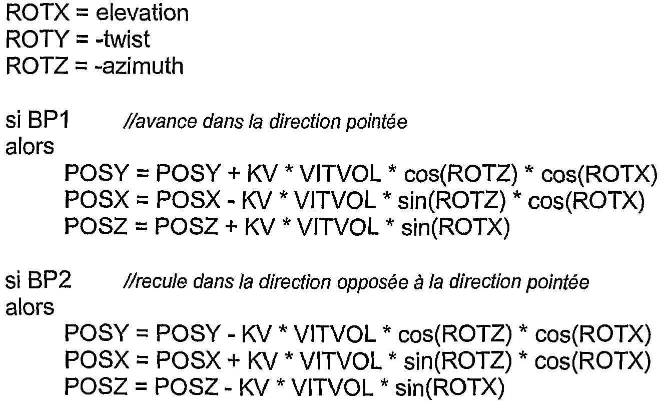

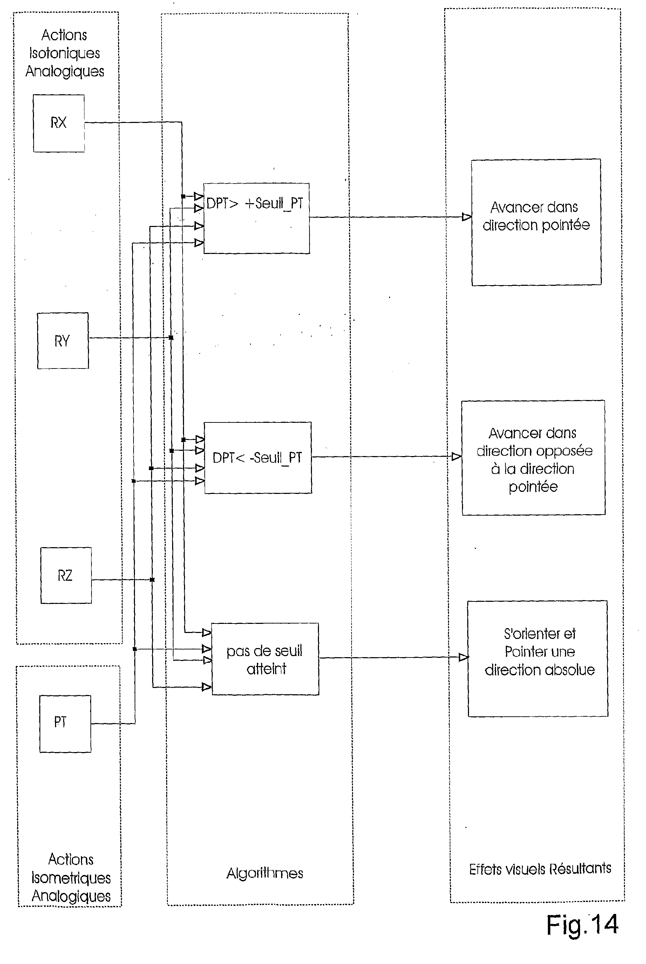

Dans le même type d'application, la figure 14 illustre un algorithme mis en oeuvre lorsque le dispositif isométrique est sensible à une force. Dans cet exemple, le dispositif isométrique est un potentiomètre. Comme expliqué précédemment dans les autres modes de réalisation, en fonction d'une valeur de seuil prédéterminé SeuilPT, l'action sur le potentiomètre a pour effet d'engendrer un déplacement en direction de la direction pointée ou un déplacement en direction opposée à la direction pointée.

Ce mode de déplacement du type boussole peut éventuellement faire l'objet d'un certain nombre de variantes.

En particulier, il est possible de réguler la vitesse de déplacement à l'aide d'une variable indiquée ci-après « gaz ». Le sens du déplacement peut également être donné non pas par le dispositif isométrique du type des boutons poussoirs BP1 et BP2 mais directement avec la valeur de l'inclinaison latérale du dispositif, c'est-à-dire sa rotation autour de l'axe Y.

L'algorithme mis en oeuvre par les moyens de traitement se présente alors de la manière suivante :

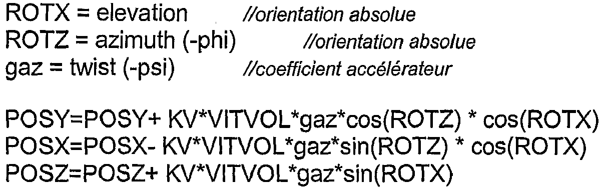

Dans un autre mode de réalisation, la navigation peut être simplifiée de telle sorte que la boussole se comporte comme une boussole à une dimension, qui permet de tourner à droite ou à gauche lorsque le dispositif de navigation est écarté de sa position de repos autour de l'axe Z. Une action sur le dispositif de navigation autour de l'axe X, en inclinant celui-ci vers l'avant ou vers l'arrière, permet de monter ou descendre en altitude. On peut également avancer ou reculer proportionnellement à l'inclinaison latérale autour de l'axe Y du dispositif de navigation 10.

Dans ce type de réalisation, il est avantageux de fixer le coefficient multiplicateur pour la vitesse de déplacement latéral dépendant de l'altitude à une valeur du type POSZ/5000.

Un exemple d'algorithme est donné ci-après pour illustrer ce mode de réalisation particulier :

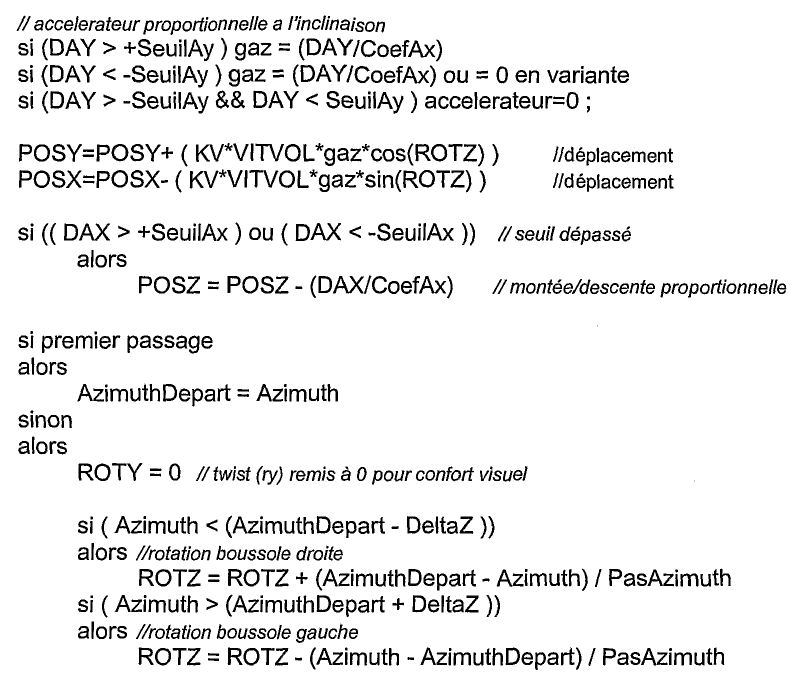

On notera que dans les méthodes présentées ci-dessus, l'utilisation des valeurs brutes données par les accéléromètres sur l'axe X (AX) ou l'axe Y (AY), peut être remplacée par l'utilisation des valeurs de sortie des magnétomètres (MX ou MY) ou encore des valeurs calculées d'angle sur l'axe X (RX) ou sur l'axe Y (RY).

Il est bien entendu nécessaire d'utiliser des valeurs de seuil adaptées à chacun des types de capteurs et de données utilisés.

De façon similaire aux modes de réalisation décrits précédemment, d'autres types d'application peuvent être mis en oeuvre dans un espace de navigation virtuel.

En particulier, il peut s'agir du déplacement d'un personnage ou d'un véhicule sur une surface terrestre ou encore à la surface de l'eau.

A la différence des exemples de réalisation précédents, l'altitude n'est pas modifiée.

En revanche, le personnage ou objet doit pouvoir dans l'espace virtuel s'arrêter, avancer ou reculer, tourner sur lui-même, tourner autour d'un objet, se déplacer latéralement à gauche ou à droite, ou encore modifier l'orientation du regard en levant ou baissant la tête.

L'ensemble des méthodes de navigation décrites précédemment peut être utilisé également dans ce type d'applications en modifiant l'affectation des actions « monter » et « descendre » qui utilisent la notion d'altitude.

A la place, ce type d'action peut être utilisé pour modifier l'orientation verticale de la caméra, c'est-à-dire pour modifier le point de vue de l'utilisateur afin de simuler un regard vers le haut ou vers le bas.

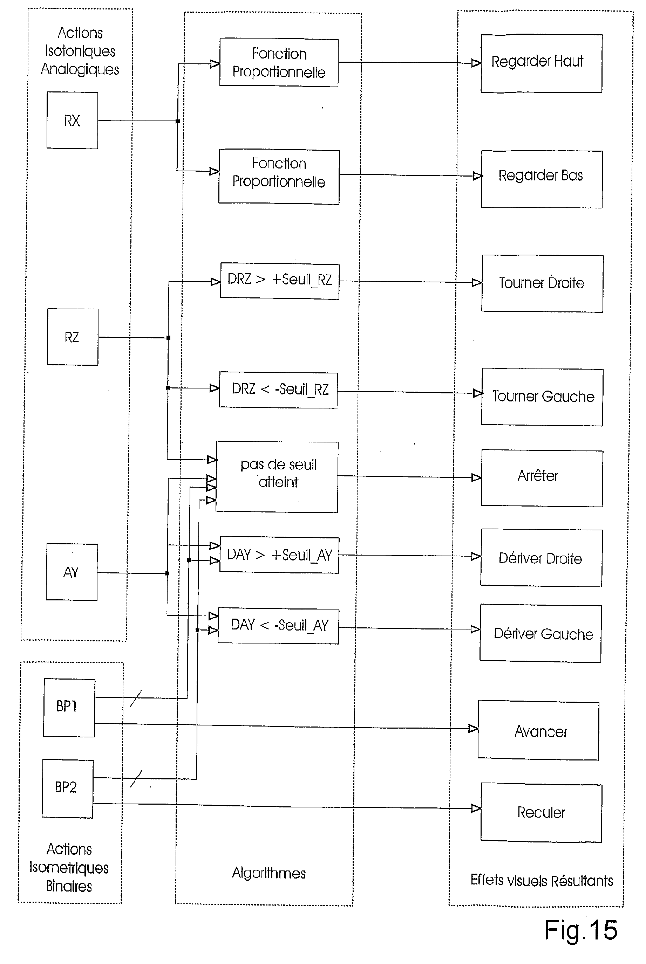

On a illustré à la figure 15 un schéma donnant un exemple de navigation d'un personnage dans un espace virtuel, du type d'un déplacement dans un bâtiment ou une ville.

L'algorithme mis en oeuvre par les moyens de traitement est similaire à celui mis en oeuvre dans les modes de réalisation décrits précédemment pour la simulation d'un avion ou d'un hélicoptère, seul le réglage de l'altitude étant supprimé.

En particulier, à la valeur de l'élévation RX autour de l'axe X du dispositif de navigation 10 est associé directement de manière proportionnelle la position angulaire ROTX permettant d'orienter verticalement la caméra de telle sorte que le regard du personnage soit dirigé vers le haut ou vers le bas.

La rotation du dispositif de navigation autour de l'axe Z permet d'engendrer des actions pour tourner à droite ou à gauche et l'inclinaison du dispositif de navigation autour de l'axe Y permet également des déplacements du personnage en dérivant à droite ou à gauche.

Comme précédemment, l'action sur l'un ou l'autre des boutons poussoirs BP1 correspond respectivement à une avance ou un recul du personnage dans l'espace virtuel.

Un exemple d'algorithme mis en oeuvre par les moyens de traitement dans ce type de navigation dans un espace virtuel est donné ci-après :

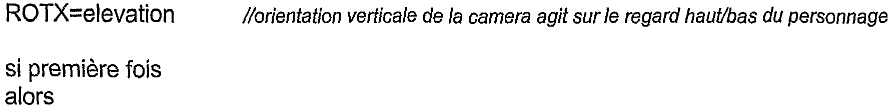

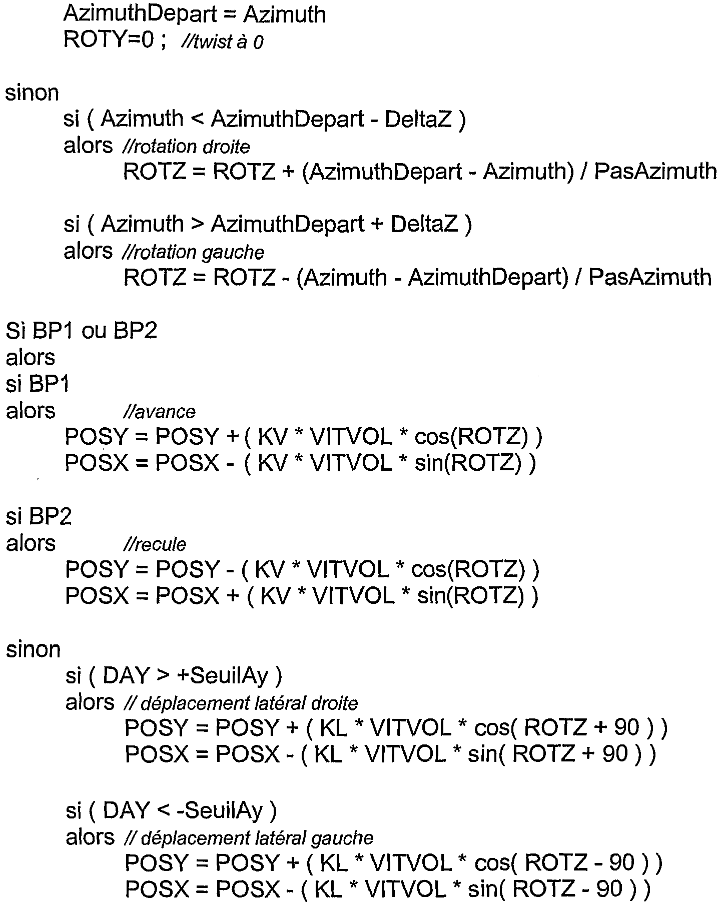

Comme dans les exemples de réalisation précédents, les actions isométriques pourraient également être réalisées au moyen d'un potentiomètre ou d'un capteur de force du type clou.

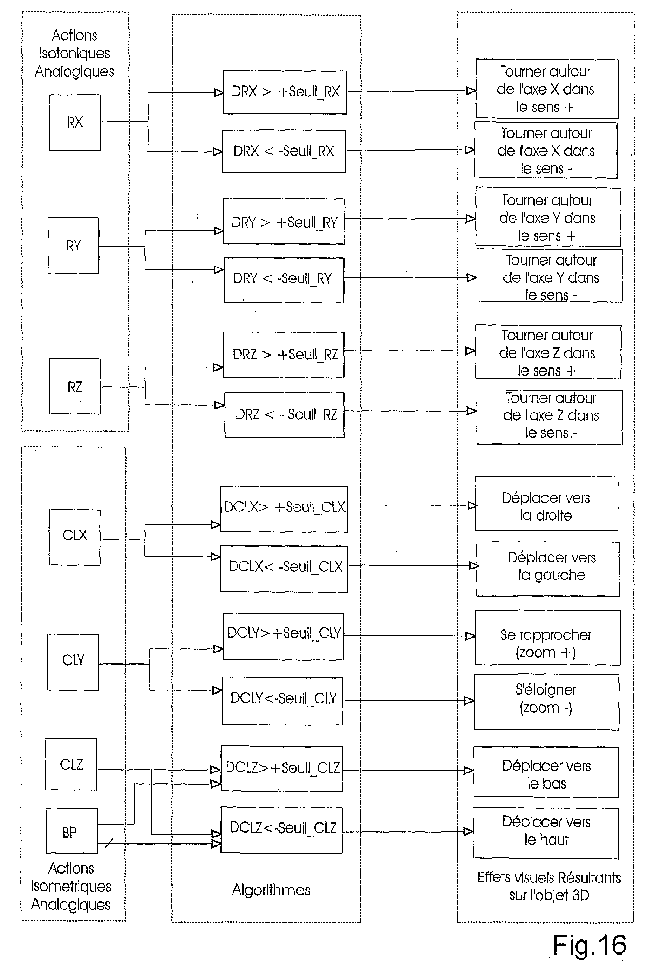

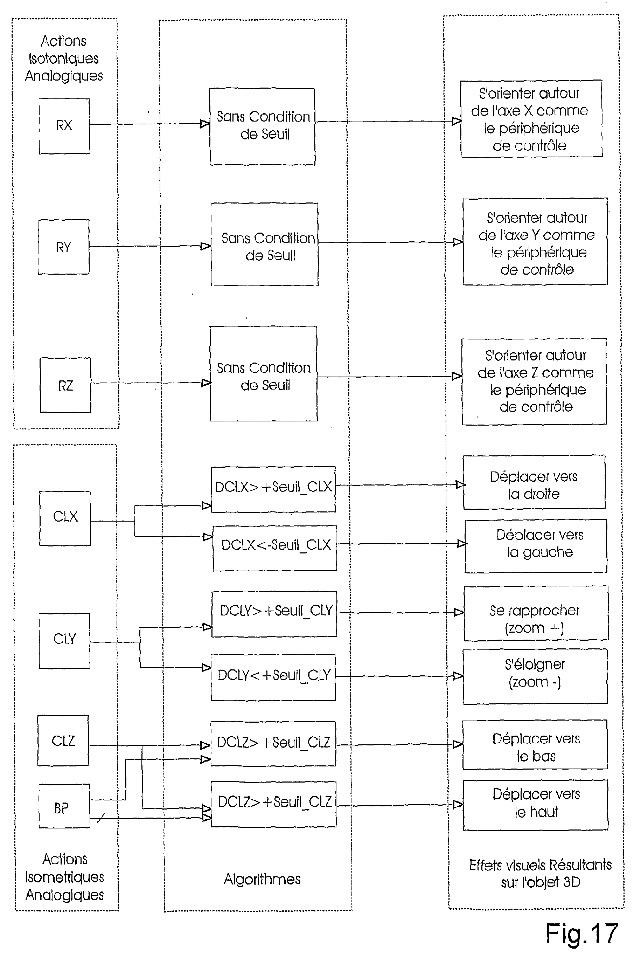

On va décrire à présent en référence aux figures 16 et 17 un autre type d'application de la présente invention, dans lequel la navigation ne consiste plus à explorer ou se déplacer dans un espace virtuel, mais à manipuler et contrôler un objet en trois dimensions dans un espace virtuel.

Il s'agit en particulier de déplacer un objet suivant ses six degrés de liberté à l'aide du dispositif de navigation 10 afin de pouvoir l'observer entièrement.

En pratique, dans ce type de navigation, l'objet doit pouvoir être tourné sur lui-même, dans toutes les directions, mais aussi être déplacé de façon la plus naturelle et aisée possible.

Comme précédemment, on utilise un dispositif de navigation 10 intégrant un capteur isotonique à trois degrés de liberté et un capteur isométrique à trois degrés de liberté mais décorrélé du capteur isotonique.

Comme explicité précédemment, un capteur isométrique à trois degrés de liberté peut être obtenu en utilisant un capteur de force du type clou sensible à des forces exercées selon les trois axes X, Y et Z associés au dispositif de navigation.

Comme expliqué précédemment, alors que les forces exercées sur les axes X et Y du plan horizontal sont bidirectionnelles, la force exercée selon l'axe vertical Z sur le capteur de force est monodirectionnelle. Afin de compléter le capteur isométrique et d'obtenir trois degrés de liberté, on associe au capteur de force du type clou au moins un bouton poussoir complémentaire.

Selon un premier mode de réalisation tel qu'illustré à la figure 16, la visualisation de l'objet est réalisée par des petits mouvements dits relatifs. A chaque instant, c'est la différence entre la position instantanée et la position de repos qui définit les déplacements de l'objet.

Les modifications dans l'espace du dispositif de navigation 10 autour des axes X, Y et Z permettent de commander directement des actions pour tourner respectivement autour des axes X, Y et Z de l'objet à visualiser.

Parallèlement à ces trois rotations mises en oeuvre dans l'espace virtuel, le dispositif isométrique permet de commander trois translations bidirectionnelles dans cet espace.

Comme illustré sur la figure 16, l'application d'une force sur le capteur de force selon la direction X permet de commander par exemple un déplacement vers la droite ou la gauche de l'objet.

De même, un déplacement sur le capteur de force selon l'axe perpendiculaire Y permet de commander une fonction de zoom consistant à se rapprocher ou à s'éloigner de l'objet.

Le dernier déplacement selon la troisième dimension de l'espace, vers le bas ou vers le haut est réalisé grâce à une action sur le capteur de force, exercée selon l'axe vertical Z et couplée à l'action ou non sur le bouton poussoir.

Ainsi dans l'exemple de réalisation illustré, lorsque l'utilisateur actionne à la fois le bouton poussoir et exerce une force sur le capteur selon la direction Z, le déplacement vers le bas est mis en oeuvre. A contrario, lorsque le bouton poussoir n'est pas actionné et que seule une action sur le capteur de force selon l'axe Z est appliquée, le déplacement est réalisé vers le haut.

En outre, l'ensemble de ces déplacements est graduel et peut être dépendant de l'intensité de la force exercée sur le capteur selon les trois directions X, Y et Z.

Dans ce cas, et contrairement aux méthodes précédentes, ce sont les coordonnées de position et d'angle de rotation de l'objet visualisé qui sont utilisées et modifiées, et non les coordonnées de la caméra, correspondant au point de vue de l'utilisateur.

Un second mode de réalisation est illustré à la figure 17.

Il s'agit ici d'effectuer des contrôles à la fois absolus et relatifs sur les mouvements du dispositif de navigation 10. Dans ce mode de réalisation, les contrôles absolus s'effectuent sur les angles de rotation associés à l'objet visualisé et les contrôles relatifs sur les déplacements axiaux.

Ainsi, l'orientation angulaire de l'objet est similaire à celle donnée par l'utilisateur au dispositif de navigation 10. En revanche, les déplacements en translation commandés par les dispositifs isométriques sont identiques à ceux décrits précédemment.

Dans ce type de navigation, une variante consiste, à non plus appliquer les valeurs de déplacement et d'orientation à l'objet visualisé, mais au contraire à une caméra adaptée à se déplacer autour de l'objet.

Un algorithme de traitement permettant à la fois la rotation et le déplacement latéral de la caméra s'apparente à celui donné précédemment en exemple pour le mode de navigation du type hélicoptère, dans lequel on combine à la fois la dérivation et la rotation de la caméra.

Bien entendu, ces exemples de navigation dans un espace virtuel ne sont donnés qu'à titre d'exemples non limitatifs.

Parallèlement à cette navigation dans un espace virtuel mise en oeuvre par exemple sur un ordinateur, la présente invention s'applique également à la manipulation et au contrôle d'un objet réel dans un espace réel.

En particulier, elle peut s'appliquer à la commande d'un avion ou d'un bateau télécommandé, ou encore un avion du type drone.

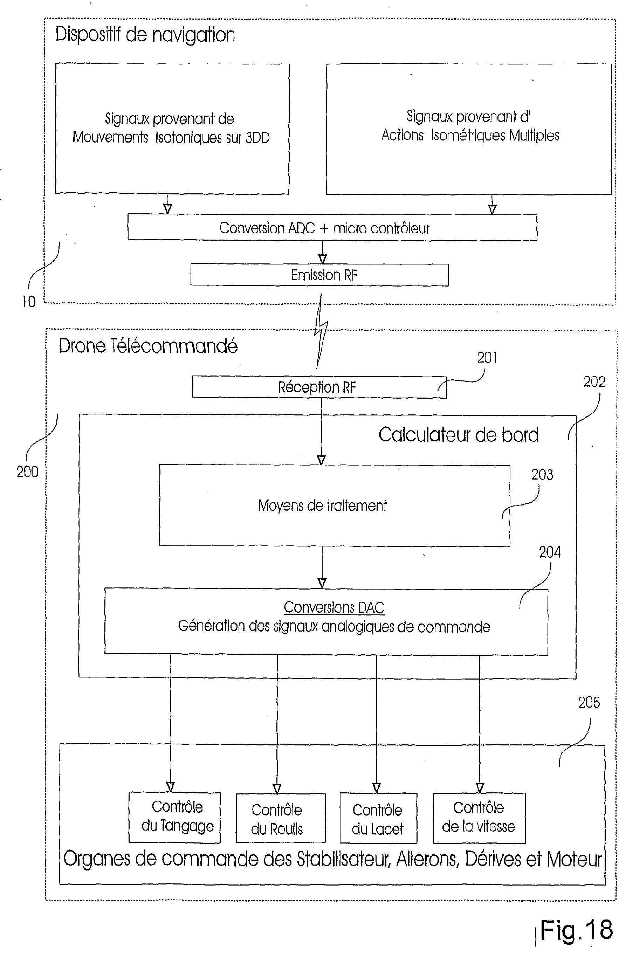

On a illustré à la figure 18 un système de navigation mettant en oeuvre un dispositif de navigation 10 tel que décrit précédemment en référence notamment à la figure 1 et qui ne sera pas redécrit ici.

Les données transmises par le dispositif de navigation 10 sont dans cette application directement transmises à un drone télécommandé 200 au niveau des moyens de réception 201.

Un calculateur de bord 202 comporte des moyens de traitement 203 adaptés à mettre en oeuvre un algorithme de traitement qui, à partir des données reçues et fusionnées, est adapté à calculer des angles de rotation RX, RY, et RZ du dispositif de navigation afin de déterminer les actions à effectuer sur les différents organes de commande du drone.

En pratique, un dispositif de conversion 204 est prévu dans le calculateur de bord afin de générer des signaux analogiques de commande à partir des signaux numériques fournis par les moyens de traitement 203.

On peut ainsi directement contrôler les organes de commande 205 du drone, constitués généralement des stabilisateurs, des ailerons, des dérives et du moteur afin de contrôler le déplacement du drone et en particulier le tangage, le roulis et le lacet, ainsi que sa vitesse de déplacement.

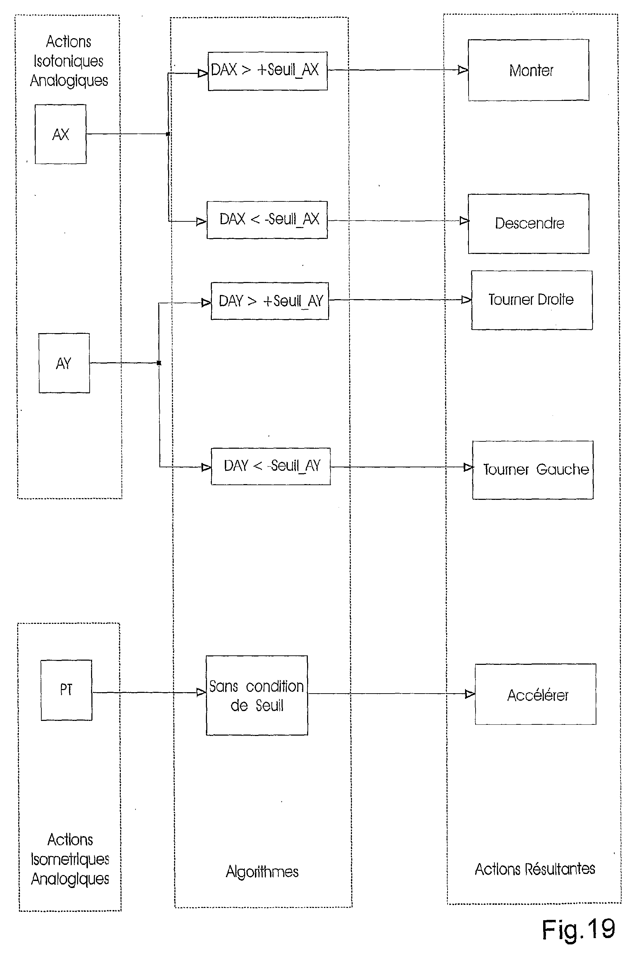

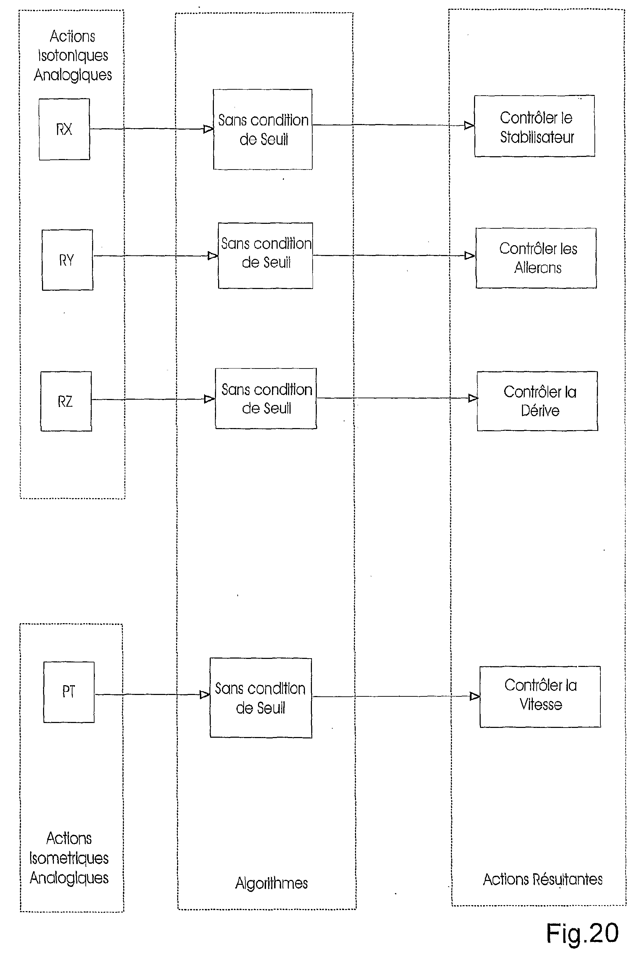

Le pilotage d'un drone peut être réalisé selon deux types de commande tels qu'illustrés aux figures 19 et 20.

Dans le premier cas, il s'agit de permettre à l'utilisateur un pilotage novice du drone.

En particulier, les actions de montée et de descente peuvent être commandées à partir de la modification de la position du dispositif de navigation 10 par rapport à l'axe X. La tension des stabilisateurs est modifiée selon une fonction proportionnelle dépendant de l'action appliquée au dispositif de navigation 10.

Ainsi la tension du stabilisateur sera dépendante par exemple de la donnée d'entrée Delta AX.

De même, pour effectuer une rotation vers la droite ou vers la gauche du drone, une fonction proportionnelle dépendante de l'inclinaison autour de l'axe Y du dispositif de navigation 10 peut être utilisée de telle sorte que la tension de l'aileron droit, la tension de l'aileron gauche et la tension de la dérive sont respectivement des fonctions proportionnelles de la donnée d'entrée Delta AY.

Parallèlement à ces actions commandées par la rotation du dispositif de navigation 10, une action sur un dispositif isométrique, et par exemple un potentiomètre PT, permet de commander l'accélération et la vitesse du drone, selon une fonction proportionnelle dépendant de la valeur Delta PT.

Dans un autre mode de réalisation tel qu'illustré à la figure 20, le mode de pilotage du drone peut être du type expert et réservé à un utilisateur expérimenté dès lors que les actions appliquées au dispositif de navigation 10, et notamment les angles d'inclinaison RX, RY et RZ du dispositif, sont directement appliquées au contrôle du stabilisateur, des ailerons et de la dérive.

En particulier, la tension du stabilisateur peut être une fonction proportionnelle dépendante de RX, la tension des ailerons peut être une fonction proportionnelle dépendante de RY et la tension de la dérive peut être une fonction proportionnelle dépendante de la valeur RZ.

Comme précédemment, le contrôle de la vitesse du drone peut être réalisé au moyen d'une fonction proportionnelle dépendante de la valeur du potentiomètre.

La présente invention permet ainsi de commander dans un espace réel un objet volant, du type avion. Le dispositif de navigation pourrait également être utilisé pour commander le déplacement d'un bateau sur l'eau, les notions de « monter » ou « descendre », modifiant l'altitude, étant alors supprimées.

Bien entendu, de nombreuses modifications peuvent être apportées aux exemples de réalisation décrits précédemment sans sortir du cadre de l'invention.

En particulier, bien que l'on ait décrit précédemment un dispositif de navigation dédié à la navigation dans un espace à trois dimensions, ce dispositif de navigation peut comporter en outre des moyens de pointage dans un espace virtuel à deux dimensions, tels que des moyens classiques équipant une souris d'ordinateur. Des moyens de commutation, du type d'un bouton à deux positions, peuvent permettre de passer d'un mode de fonctionnement dans lequel le dispositif est manipulé par l'utilisateur pour permettre la détection de l'inclinaison du boîtier, et ainsi la navigation dans un espace à au moins trois dimensions, et un second mode de fonctionnement dans lequel le dispositif fonctionne comme un pointeur dans un espace virtuel à deux dimensions, et par exemple en étant déplacé sur un plan de travail.

## Revendications

1. Dispositif autonome de navigation dans un espace à au moins trois dimensions comportant un boîtier (10) susceptible d'être manipulé par un utilisateur, ledit boîtier incorporant des moyens générateurs de signaux (20) représentatifs de l'inclinaison du boîtier (10) selon ses axes de tangage, de roulis et de lacet, lesdits moyens générateurs de signaux (20) représentatifs de l'inclinaison du boîtier étant adaptés à générer des signaux de commande d'au moins une rotation bidirectionnelle dans ledit espace, ledit boîtier incorporant au moins un dispositif isométrique (30) adapté à être actionné par un doigt de l'utilisateur tenant ledit boîtier dans une main, ledit dispositif isométrique (30) étant sensible à une force exercée selon au moins deux axes dudit dispositif isométrique (30), ledit dispositif isométrique (30) étant adapté à générer un signal de commande d'au moins une translation bidirectionnelle selon au moins un axe dudit espace, le signal de commande d'au moins une translation étant un signal représentatif de la force exercée selon un axe desdits au moins deux axes dudit dispositif isométrique (30),
le dispositif autonome de navigation étant adapté à une manipulation à l'aide d'une seule main, le boîtier (10) ayant une forme sensiblement parallélépipédique, le dispositif isométrique (30) étant disposé sur une face supérieure (12) du boîtier et adapté à être actionné par le pouce d'un utilisateur tenant ledit boîtier (10) dans une main, ou disposé sur une face latérale (17) dudit boîtier et adapté à être actionné par un doigt de l'utilisateur tenant ledit boîtier dans une main, et en ce que ledit dispositif isométrique (30) est sensible à une force exercée selon trois axes dudit dispositif isométrique (30) et est adapté à générer des signaux de commande d'un déplacement selon trois axes dudit espace.

2. Dispositif autonome de navigation conforme à la revendication 1, **caractérisé en ce que** lesdits moyens générateurs de signaux (20) représentatifs de l'inclinaison du boîtier (10) comportent au moins deux accéléromètres (22) et deux magnétomètres (23).

3. Dispositif autonome de navigation conforme à la revendication 1 ou la revendication 2, **caractérisé en ce qu'**il comporte en outre d'une part des moyens de pointage dans un espace virtuel à deux dimensions, et, d'autre part, des moyens de commutation de mode de fonctionnement entre un premier mode dans lequel le dispositif est manipulé par un utilisateur pour permettre la détection de l'inclinaison du boîtier et un second mode dans lequel le dispositif fonctionne comme un pointeur dans un espace virtuel à deux dimensions.

4. Système de navigation dans un espace à au moins trois dimensions comprenant :
- un dispositif (10) selon l'une quelconque des revendications précédentes ; et
- des moyens de traitement (130, 203) adaptés à prendre en compte les signaux représentatifs de l'inclinaison du boîtier et le signal de commande pour générer au moins une rotation bidirectionnelle et une translation bidirectionnelle dans ledit espace à au moins trois dimensions.

5. Système de navigation conforme à la revendication 4, **caractérisé en ce que** les signaux représentatifs de l'inclinaison du boîtier sont adaptés à générer trois déplacements bidirectionnels dans ledit espace.

6. Système de navigation conforme à la revendication 5, **caractérisé en ce que** lesdits signaux représentatifs de l'inclinaison du boîtier sont adaptés à générer des signaux de commande de rotation bidirectionnelle dans ledit espace.

7. Système de navigation conforme à l'une des revendications 4 à 6, **caractérisé en ce que** le signal de commande est adapté à générer des déplacements selon trois axes dudit espace.

8. Système de navigation conforme à la revendication 7, **caractérisé en ce que** le signal de commande est un signal représentatif d'une force exercée selon un axe desdits au moins deux axes du dispositif isométrique du dispositif autonome de navigation et **en ce que** le signal de commande est adapté à générer une translation dans ledit espace dépendant de ladite force exercée selon ledit axe.

9. Système de navigation conforme à la revendication 8, **caractérisé en ce que** la translation dans l'espace est dépendante d'une comparaison dudit signal représentatif de la force exercée selon ledit axe avec une valeur de seuil prédéterminée.

10. Procédé de navigation dans un espace à au moins trois dimensions, **caractérisé en ce qu'**il comprend les étapes suivantes :
- acquisition de signaux représentatifs de l'inclinaison d'un boîtier, manipulé à l'aide d'une seule main, (10) selon les axes de tangage, de roulis et de lacets ;
- acquisition d'un signal de commande d'un déplacement bidirectionnel dans l'espace selon trois axes dudit espace, généré par un dispositif isométrique (30) incorporé dans ledit boîtier (10), adapté à être actionné par un doigt de l'utilisateur tenant le boîtier dans la main, le boîtier (10) ayant une forme sensiblement parallélépipédique, le dispositif isométrique (30) étant disposé sur une face supérieure (12) du boîtier et adapté à être actionné par le pouce d'un utilisateur tenant ledit boîtier (10) dans une main, ou disposé sur une face latérale (17) dudit boîtier et adapté à être actionné par un doigt de l'utilisateur tenant ledit boîtier dans une main, ledit dispositif isométrique (30) étant sensible à une force exercée selon trois axes dudit dispositif isométrique (30) ;
- génération d'au moins une rotation bidirectionnelle dans ledit espace à partir des signaux représentatifs de l'inclinaison du boîtier ; et
- génération d'au moins une translation bidirectionnelle dans ledit espace à partir dudit signal de commande représentatif de la force exercée selon un axe desdits au moins deux axes du dispositif isométrique (30).

11. Procédé de navigation conforme à la revendication 10, **caractérisé en ce qu'**il comprend les étapes de génération de signaux de commande de rotation bidirectionnelle et de translation bidirectionnelle dans ledit espace à partir desdits signaux représentatifs de l'inclinaison du boîtier et une étape de génération de signaux de commande de translation dans ledit espace à partir de signaux de commande générés par le dispositif isométrique.

12. Procédé de navigation conforme à la revendication 10, **caractérisé en ce qu'**il comprend les étapes de génération de signaux de commande de deux rotations bidirectionnelles et d'une translation bidirectionnelle dans ledit espace à partir desdits signaux représentatifs de l'inclinaison du boîtier et une étape de génération de signaux de commande de translation dans ledit espace à partir de signaux de commande générés par le dispositif isométrique.

13. Procédé de navigation conforme à la revendication 10, **caractérisé en ce qu'**il comprend les étapes de génération de signaux de commande d'une rotation bidirectionnelle et de deux translations bidirectionnelles dans ledit espace à partir desdits signaux représentatifs de l'inclinaison du boîtier et une étape de génération de signaux de commande de translation bidirectionnelle dans ledit espace à partir de signaux de commande générés par le dispositif isométrique.

14. Procédé de navigation conforme à la revendication 10, **caractérisé en ce qu'**il comprend les étapes de génération de signaux de commande de trois rotations bidirectionnelles dans ledit espace à partir desdits signaux représentatifs de l'inclinaison du boîtier et une étape de génération de signaux de commande de translation dans ledit espace à partir de signaux de commande générés par le dispositif isométrique.

15. Procédé de navigation conforme à la revendication 10, **caractérisé en ce qu'**il comprend les étapes de génération de signaux de commande de trois rotations bidirectionnelles dans ledit espace à partir desdits signaux représentatifs de l'inclinaison du boîtier et une étape de génération de signaux de commande de trois translations bidirectionnelles dans ledit espace à partir de signaux de commande générés par le dispositif isométrique.

## Patentansprüche

1. Autonome Vorrichtung zur Navigation in einem zumindest dreidimensionalen Raum, enthaltend ein Gehäuse (10), das von einem Benutzer gehandhabt werden kann, wobei das Gehäuse Einrichtungen (20) zum Erzeugen von Signalen umfasst, die repräsentativ sind für die Neigung des Gehäuses (10) in seiner Nick-, seiner Roll- und seiner Gierachse, wobei die Einrichtungen (20) zum Erzeugen von für die Neigung des Gehäuses repräsentativen Signalen dazu ausgelegt sind, Steuersignale zum Steuern zumindest einer bidirektionalen Drehung in dem Raum zu erzeugen, wobei das Gehäuse zumindest eine isometrische Vorrichtung (30) umfasst, die dazu ausgelegt ist, mit dem Finger von einem Benutzer, der das Gehäuse in seiner Hand hält, betätigt zu werden, wobei die isometrische Vorrichtung (30) gegenüber einer Kraft empfindlich ist, die in zumindest zwei Achsen der isometrischen Vorrichtung (30) ausgeübt wird, wobei die isometrische Vorrichtung (30) dazu ausgelegt ist, ein Steuersignal zum Steuern von zumindest einer bidirektionalen Verschiebung in zumindest einer Achse des Raums zu erzeugen, wobei das Steuersignal zum Steuern zumindest einer Verschiebung ein Signal ist, das repräsentativ ist für die in einer Achse der zumindest zwei Achsen der isometrischen Vorrichtung (30) ausgeübte Kraft, wobei die autonome Navigationsvorrichtung für eine Handhabung mit Hilfe von nur einer Hand ausgelegt ist, wobei das Gehäuse (10) im Wesentlichen quaderförmig ist, wobei die isometrische Vorrichtung (30) an einer Oberseite (12) des Gehäuses angeordnet und dazu ausgelegt ist, mit dem Daumen von einem Benutzer betätigt zu werden, der das Gehäuse (10) in seiner Hand hält, oder an einer Seitenfläche (17) des Gehäuses angeordnet und dazu ausgelegt ist, mit dem Finger von dem Benutzer betätigt zu werden, der das Gehäuse in seiner Hand hält, und wobei die isometrische Vorrichtung (30) gegenüber einer Kraft empfindlich ist, die in drei Achsen der isometrischen Vorrichtung (30) ausgeübt wird, und dazu ausgelegt ist, Steuersignale zum Steuern ein Verlagerung in drei Raumachsen zu erzeugen.

2. Autonome Navigationsvorrichtung nach Anspruch 1, **dadurch gekennzeichnet, dass** die Einrichtungen (20) zum Erzeugen von für die Neigung des Gehäuses (10) repräsentativen Signalen zumindest zwei Beschleunigungssensoren (22) und zwei Magnetometer (23) aufweisen.

3. Autonome Navigationsvorrichtung nach Anspruch 1 oder Anspruch 2, **dadurch gekennzeichnet, dass** sie ferner einerseits Zeigemittel zum Zeigen in einem virtuellen, zweidimensionalen Raum und andererseits Schaltmittel zum Umschalten eines Betriebsmodus zwischen einem ersten Modus, in welchem die Vorrichtung von einem Benutzer gehandhabt wird, um die Detektion der Neigung des Gehäuses zu gestatten, und einem zweiten Modus, in welchem die Vorrichtung als Zeiger in einem virtuellen, zweidimensionalen Raum betrieben wird.

4. Navigationssystem zum Navigieren in einem zumindest dreidimensionalen Raum, enthaltend:
- eine Vorrichtung (10) nach einem der vorangehenden Ansprüche; und
- Verarbeitungseinrichtungen (130, 203), die dazu ausgelegt sind, für die Neigung des Gehäuses repräsentative Signale und das Steuersignal zu berücksichtigen, um zumindest eine bidirektionale Drehung und eine bidirektionale Verschiebung in dem zumindest dreidimensionalen Raum zu erzeugen.

5. Navigationssystem nach Anspruch 4, **dadurch gekennzeichnet, dass** die für die Neigung des Gehäuses repräsentativen Signale dazu ausgelegt sind, drei bidirektionale Verlagerungen in dem Raum zu erzeugen.

6. Navigationssystem nach Anspruch 5, **dadurch gekennzeichnet, dass** die für die Neigung des Gehäuses repräsentativen Signale dazu ausgelegt sind, Steuersignale zum Steuern einer bidirektionalen Drehung in dem Raum zu erzeugen.

7. Navigationssystem nach einem der Ansprüche 4 bis 6, **dadurch gekennzeichnet, dass** das Steuersignal dazu ausgelegt ist, Verlagerungen in drei Achsen des Raums zu erzeugen.

8. Navigationssystem nach Anspruch 7, **dadurch gekennzeichnet, dass** das Steuersignal ein für eine Kraft repräsentatives Signal ist, die in einer Achse der zumindest zwei Achsen der isometrischen Vorrichtung der autonomen Navigationsvorrichtung ausgeübt wird, und dass das Steuersignal dazu ausgelegt ist, eine Verschiebung in dem Raum zu erzeugen, die von der in der Achse ausgeübten Kraft abhängig ist.

9. Navigationssystem nach Anspruch 8, **dadurch gekennzeichnet, dass** die Verschiebung in dem Raum von einem Vergleich des für die in der Achse ausgeübte Kraft repräsentativen Signals mit einem vorbestimmten Schwellwert abhängig ist.

10. Verfahren zur Navigation in einem zumindest dreidimensionalen Raum, **dadurch gekennzeichnet, dass** es die nachstehenden Schritte umfasst:
- Erfassen von Signalen, die für die Neigung eines Gehäuses (10) repräsentativ sind, das mit Hilfe von nur einer Hand gehandhabt wird, und zwar in der Nick-, der Roll- und der Gierachse;
- Erfassen eines Steuersignals zum Steuern einer bidirektionalen Verlagerung im Raum in drei Achsen des Raums, das von einer isometrischen Vorrichtung (30) erzeugt wird, die in dem Gehäuse (10) aufgenommen ist, das dazu ausgelegt ist, mit dem Finger von einem Benutzer betätigt zu werden, der das Gehäuse in seiner Hand hält, wobei das Gehäuse (10) im Wesentlichen quaderförmig ist, wobei die isometrische Vorrichtung (30) an einer Oberseite (12) des Gehäuses angeordnet und dazu ausgelegt ist, mit dem Daumen von einem Benutzer betätigt zu werden, der das Gehäuse (10) in seiner Hand hält, oder an einer Seitenfläche (17) des Gehäuses angeordnet und dazu ausgelegt ist, mit dem Finger von dem Benutzer betätigt zu werden, der das Gehäuse in seiner Hand hält, wobei die isometrische Vorrichtung (30) gegenüber einer Kraft empfindlich ist, die in drei Achsen der isometrischen Vorrichtung (30) ausgeübt wird;
- Erzeugen von zumindest einer bidirektionalen Drehung in dem Raum ausgehend von den für die Neigung des Gehäuses repräsentativen Signalen; und
- Erzeugen von zumindest einer bidirektionalen Verschiebung in dem Raum ausgehend von dem Steuersignal, das für die Kraft repräsentativ ist, die in einer Achse der zumindest zwei Achsen der isometrischen Vorrichtung (30) ausgeübt wird.

11. Navigationsverfahren nach Anspruch 10, **dadurch gekennzeichnet, dass** es die Schritte des Erzeugens von Steuersignalen zum Steuern einer bidirektionalen Drehung und einer bidirektionalen Verschiebung in dem Raum ausgehend von für die Neigung des Gehäuses repräsentativen Signalen und einen Schritt des Erzeugens von Steuersignalen zum Steuern einer Verschiebung in dem Raum ausgehend von von der isometrischen Vorrichtung erzeugten Steuersignalen umfasst.

12. Navigationsverfahren nach Anspruch 10, **dadurch gekennzeichnet, dass** es die Schritte des Erzeugens von Steuersignalen zum Steuern von zwei bidirektionalen Drehungen und einer bidirektionalen Verschiebung in dem Raum ausgehend von für die Neigung des Gehäuses repräsentativen Signalen und einen Schritt des Erzeugens von Steuersignalen zum Steuern einer Verschiebung in dem Raum ausgehend von von der isometrischen Vorrichtung erzeugten Steuersignalen umfasst.

13. Navigationsverfahren nach Anspruch 10, **dadurch gekennzeichnet, dass** es die Schritte des Erzeugens von Steuersignalen zum Steuern einer bidirektionalen Drehung und von zwei bidirektionalen Verschiebungen in dem Raum ausgehend von für die Neigung des Gehäuses repräsentativen Signalen und einen Schritt des Erzeugens von Steuersignalen zum Steuern einer bidirektionalen Verschiebung in dem Raum ausgehend von von der isometrischen Vorrichtung erzeugten Steuersignalen umfasst.

14. Navigationsverfahren nach Anspruch 10, **dadurch gekennzeichnet, dass** es die Schritte des Erzeugens von Steuersignalen zum Steuern von drei bidirektionalen Drehungen in dem Raum ausgehend von für die Neigung des Gehäuses repräsentativen Signalen und einen Schritt des Erzeugens von Steuersignalen zum Steuern einer Verschiebung in dem Raum ausgehend von von der isometrischen Vorrichtung erzeugten Steuersignalen umfasst.

15. Navigationsverfahren nach Anspruch 10, **dadurch gekennzeichnet, dass** es die Schritte des Erzeugens von Steuersignalen zum Steuern von drei bidirektionalen Drehungen in dem Raum ausgehend von für die Neigung des Gehäuses repräsentativen Signalen und einen Schritt des Erzeugens von Steuersignalen zum Steuern von drei bidirektionalen Verschiebungen in dem Raum ausgehend von von der isometrischen Vorrichtung erzeugten Steuersignalen umfasst.

## Claims

1. A stand-alone device for navigating in a space having at least three dimensions, comprising a casing (10) able to be manipulated by a user, said casing incorporating means for generating signals (20) representing the inclination of the casing (10) with respect to its pitch, roll and yaw axes, said means for generating signals (20) representing the inclination of the casing being adapted to generate signals for controlling at least one bidirectional rotation in said space, said casing incorporating at least one isometric device (30) adapted to be operated by a finger of the user holding the casing in one hand, said isometric device (30) being sensitive to a force exerted along at least two axes of said isometric device (30), said isometric device (30) being adapted to generate a control signal for at least one bidirectional translation along at least one axis of said space, the control signal of at least one translation being a signal representing the force exerted along an axis of at least two axes of said isometric device (30), the stand-alone device being adapted for manipulation by a single hand, the casing (10) having a substantially parallelepipedal shape, the isometric device (30) being disposed on an upper face (12) of the casing and adapted to be operated by the thumb of a user holding said casing (10) in one hand, or disposed on a lateral face (17) of said casing and adapted to be operated by a finger of the user holding said casing (10) in one hand, and in that the isometric device (30) is sensitive to a force exerted along three axes of said isometric device (30) and is adapted to generate signals for controlling a movement with respect to three axes of said space.

2. A stand-alone navigation device according to claim 1, **characterised in that** said means for generating signals (20) representing the inclination of the casing (10) comprise at least two accelerometers (22) and two magnetometers (23).

3. A stand-alone navigation device according to claim 1 or claim 2 **characterised in that** it further comprises means for pointing in a virtual space having two dimensions and means for switching a mode of operation between a first mode in which the device is manipulated by a user to enable the detection of the inclination of the casing and a second mode in which the device operates as a pointer in a virtual space having two dimensions.

4. A navigation system for navigating in a space having at least three dimensions comprising:
- a device (10) according to any one of the preceding claims; and
- processor means (130, 203) adapted to take into account the signals representing the inclination of the casing and the control signal for generating at least one bidirectional rotation and a bidirectional translation in said space having at least three dimensions.

5. A navigation system according to claim 4, **characterised in that** the signals representing the inclination of the casing are adapted to generate three bidirectional movements in said space.

6. A navigation system according to claim 5, **characterised in that** said signals representing the inclination of the casing are adapted to generate signals for controlling bidirectional rotation in said space.

7. A navigation system according to one of claims 4 to 6, **characterised in that** the control signal is adapted to generate movements with respect to three axes of said space.

8. A navigation system according to claim 7, **characterised in that** the control signal is a signal representing a force exerted along one axis of said at least two axes of the isometric device of the stand-alone navigation device and **in that** the control signal is adapted to generate a translation in said space depending on said force exerted along said axis.

9. A navigation system according to claim 8, **characterised in that** the translation in the space depends on a comparison of said signal representing the force exerted along said axis with a predetermined threshold value.

10. A navigation method for navigating in a space having at least three dimensions, **characterised in that** it comprises the following steps:
- acquiring signals representing an inclination of a casing, manipulated using a single hand, (10) with respect to the pitch, roll and yaw axes;
- acquiring a control signal for controlling a bidirectional movement in the space along three axes of said space, generated by an isometric device (30) incorporated into said casing (10), adapted to be operated by a finger of the user holding the casing in his or her hand, the casing (10) having a substantially parallelepipedal shape, the isometric device (30) being disposed on an upper face (12) of the casing and adapted to be operated by the thumb of a user holding said casing (10) in one hand, or disposed on a lateral face (17) of said casing and adapted to be operated by a finger of the user holding said casing in one hand, said isometric device (30) being sensitive to a force exerted along three axes of said isometric device (30);
- generating at least one bidirectional rotation in said space from signals representing the inclination of the casing; and
- generating at least one bidirectional translation in said space from said control signal representing the force exerted along an axis of said at least two axes of the isometric device (30).

11. A navigation method according to claim 10, **characterised in that** it comprises the steps of generating signals for controlling bidirectional rotation and bidirectional translation in said space from said signals representing the inclination of the casing and a step of generating signals for controlling translation in said space from control signals generated by the isometric device.

12. A navigation method according to claim 10, **characterised in that** it comprises the steps of generating signals for controlling two bidirectional rotations and a bidirectional translation in said space from said signals representing the inclination of the casing and a step of generating signals for controlling translation in said space from control signals generated by the isometric device.

13. A navigation method according to claim 10, **characterised in that** it comprises the steps of generating signals for controlling a bidirectional rotation and two bidirectional translations in said space from said signals representing the inclination of the casing and a step of generating signals for controlling bidirectional translation in said space from control signals generated by the isometric device.

14. A navigation method according to claim 10, **characterised in that** it comprises the steps of generating signals for controlling three bidirectional rotations in said space from said signals representing the inclination of the casing and a step of generating signals for controlling translation in said space from control signals generated by the isometric device.

15. A navigation method according to claim 10, **characterised in that** it comprises the steps of generating signals for controlling three bidirectional rotations in said space from said signals representing the inclination of the casing and a step of generating signals for controlling three bidirectional translations in said space from control signals generated by the isometric device.
